# EUROPEAN PATENT SPECIFICATION

(11) **EP 4 109 312 B1**
(45) Date of publication and mention of the grant of the patent: **02.07.2025**
(21) Application number: 22166215.8
(22) Date of filing: 31.03.2022
(51) Int. Cl.: G06F 21/60, H04L 9/40, G06F 21/53, G06F 15/173, G06F 9/455

(54) **CIRCUITRY AND METHODS FOR SUPPORTING ENCRYPTED REMOTE DIRECT MEMORY ACCESS (ERDMA) FOR LIVE MIGRATION OF A VIRTUAL MACHINE**
SCHALTUNG UND VERFAHREN ZUR UNTERSTÜTZUNG VON VERSCHLÜSSELTEN FERNGESTEUERTEN DIREKTSPEICHERZUGRIFF (ERDMA) ZUR LIVE-MIGRATION EINER VIRTUELLEN MASCHINE
CIRCUITS ET PROCÉDÉS PERMETTANT DE PRENDRE EN CHARGE UN ACCÈS DIRECT À LA MÉMOIRE À DISTANCE CRYPTÉ (ERDMA) POUR LA MIGRATION EN DIRECT D'UNE MACHINE VIRTUELLE

(30) Priority: 25.06.2021 US 202117359117
(43) Date of publication of application: 28.12.2022
(73) Proprietor: Intel Corporation, Santa Clara, CA 95054 (US)
(72) Inventor: Griffy, Scott, Hillsboro, OR 97124 (US); Bronleewe, David, Hillsboro, OR 97123 (US); Khosravi, Hormuzd, Portland, OR 97229 (US); Chhabra, Siddhartha, Portland, OR 97229 (US)
(74) Representative: Samson & Partner Patentanwälte mbB

(56) References cited:
- EP-A1- 2 879 053
- US-A1- 2019 068 557
- WEI HUANG ET AL: "High performance virtual machine migration with RDMA over modern interconnects", CLUSTER COMPUTING, 2007 IEEE INTERNATIONAL CONFERENCE ON, IEEE, PISCATAWAY, NJ, USA, 17 September 2007 (2007-09-17), pages 11 - 20, XP031324073, ISBN: 978-1-4244-1387-4

## Description

### TECHNICAL FIELD

The disclosure relates generally to electronics, and, more specifically, an embodiment of the disclosure relates to circuitry to support encrypted remote direct memory access for live migration of a virtual machine.

### BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (I/O). It should be noted that the term instruction herein may refer to a macro-instruction, e.g., an instruction that is provided to the processor for execution, or to a micro-instruction, e.g., an instruction that results from a processor's decoder decoding macro-instructions.

Document US 2019/0068557 Al discloses an efficient migration for encrypted virtual machines by active page copying. Document Wei Huang et al.: "High performance virtual machine migration with RDMA over modern interconnects", cluster computing, 2007 IEEE international conference on, IEEE, Piscataway, NJ, USA, 17 September 2007 (2007-09-17), pages 11-20, XP031324073, ISBN: 978-1-4244-1387-4 discloses a High Performance Virtual Machine Migration with RDMA over Modern Interconnects. Document EP 2 879 053 A1 discloses a virtual machine memory data migration method, related apparatus, and cluster system.

### SHORT DESCRIPTION OF THE INVENTION

Examples of apparatuses, methods, and non-transitory machine readable mediums are detailed as follows. Features of the present disclosure are recited.

According to one aspect of the present disclosure, an apparatus comprises an encryption circuit in a hardware processor of a first computer system to encrypt data; a memory controller circuit, of the first computer system, comprising a port to couple to a network interface controller circuit; a direct memory access engine circuit of the first computer system to access a memory in the first computer system; and the hardware processor to, for a request to perform a live migration of a virtual machine from the first computer system to a second computer system via the network interface controller circuit: encrypt code and data of the virtual machine from the memory with an encryption key by the encryption circuit of the hardware processor, store the encrypted code and data of the virtual machine within a migration buffer of the memory of the first computer system by the direct memory access engine circuit, and cause the network interface controller circuit to send the encrypted code and data of the virtual machine from the migration buffer to the second computer system via the network interface controller circuit.

In some examples, the apparatus, wherein the hardware processor may cause the network interface controller circuit to send the encrypted code and data of the virtual machine from the migration buffer to the second computer system via the network interface controller circuit without performing an additional encryption.

In some examples, the apparatus, wherein the hardware processor may cause the network interface controller circuit to send the encrypted code and data of the virtual machine from the migration buffer to the second computer system via a remote direct memory access engine circuit of the network interface controller circuit.

In some examples, the apparatus, wherein the encryption circuit may be separate from any hardware processor core of the first computer system.

In some examples, the apparatus, wherein the hardware processor, when in an address independent encryption mode, may cause the encryption circuit to perform an address independent encryption of the code and data of the virtual machine from the memory.

In some examples, the apparatus, wherein the hardware processor, when in an address dependent encryption mode, may cause the encryption circuit to perform an address dependent encryption of the code and data of the virtual machine from the memory.

In some examples, the apparatus, wherein the encryption circuit in the hardware processor may encrypt the code and data of the virtual machine from the memory with an offset provided from the second computer system and the encryption key.

In some examples, the apparatus, wherein the encryption circuit in the hardware processor may encrypt the code and data of the virtual machine from the memory with the encryption key provided from the second computer system.

According to one aspect of the present disclosure, a method comprises: executing a virtual machine on a first computer system; sending an indication from the first computer system to a second computer system of a live migration of the virtual machine from the first computer system to the second computer system via a network interface controller circuit of the first computer system; encrypting code and data of the virtual machine from a memory of the first computer system with an encryption key by an encryption circuit in a hardware processor of the first computer system; storing the encrypted code and data of the virtual machine within a migration buffer of the memory of the first computer system by a direct memory access engine circuit of the first computer system; and sending the encrypted code and data of the virtual machine from the migration buffer to the second computer system via the network interface controller circuit.

In some examples, the method, wherein the sending of the encrypted code and data of the virtual machine from the migration buffer to the second computer system via the network interface controller circuit may be without the network interface controller circuit performing an additional encryption.

In some examples, the method, wherein the sending of the encrypted code and data of the virtual machine from the migration buffer to the second computer system may be via a remote direct memory access engine circuit of the network interface controller circuit.

In some examples, the method, wherein the encryption circuit may be separate from any hardware processor core of the first computer system.

In some examples, the method, wherein the encrypting may be an address independent encryption of the code and data of the virtual machine from the memory when the encryption circuit in the hardware processor may be set into an address independent encryption mode.

In some examples, the method, wherein the encrypting may be an address dependent encryption of the code and data of the virtual machine from the memory when the encryption circuit in the hardware processor may be set into an address dependent encryption mode.

In some examples, the method, wherein the encrypting may be with an offset provided from the second computer system.

In some examples, the method, wherein the encrypting may be with the encryption key provided from the second computer system.

According to one aspect of the present disclosure, a non-transitory machine readable medium that stores program code that when executed by a machine causes the machine to perform a method comprises: executing a virtual machine on a first computer system; sending an indication from the first computer system to a second computer system of a live migration of the virtual machine from the first computer system to the second computer system via a network interface controller circuit of the first computer system; encrypting code and data of the virtual machine from a memory of the first computer system with an encryption key by an encryption circuit in a hardware processor of the first computer system; storing the encrypted code and data of the virtual machine within a migration buffer of the memory of the first computer system by a direct memory access engine circuit of the first computer system; and sending the encrypted code and data of the virtual machine from the migration buffer to the second computer system via the network interface controller circuit.

In some examples, the non-transitory machine readable medium, wherein the sending of the encrypted code and data of the virtual machine from the migration buffer to the second computer system via the network interface controller circuit may be without the network interface controller circuit performing an additional encryption.

In some examples, the non-transitory machine readable medium, wherein the sending of the encrypted code and data of the virtual machine from the migration buffer to the second computer system may be via a remote direct memory access engine circuit of the network interface controller circuit.

In some examples, the non-transitory machine readable medium, wherein the encryption circuit may be separate from any hardware processor core of the first computer system.

In some examples, the non-transitory machine readable medium, wherein the encrypting may be an address independent encryption of the code and data of the virtual machine from the memory when the encryption circuit in the hardware processor may be set into an address independent encryption mode.

In some examples, the non-transitory machine readable medium, wherein the encrypting may be an address dependent encryption of the code and data of the virtual machine from the memory when the encryption circuit in the hardware processor may be set into an address dependent encryption mode.

In some examples, the non-transitory machine readable medium, wherein the encrypting may be with an offset provided from the second computer system.

In some examples, the non-transitory machine readable medium, wherein the encrypting may be with the encryption key provided from the second computer system.

### SUMMARY OF THE INVENTION

The invention provides subject-matter as defined in the independent claims, preferred embodiments thereof are defined in the dependent claims.

### BRIEF DESCRIPTION OF THE DRAWINGS

The present disclosure is illustrated by way of example and not limitation in the figures of the accompanying drawings, in which like references indicate similar elements and in which:
**Figure 1A** illustrates a first computer system coupled to a second computer system via a network according to embodiments of the disclosure.
**Figure 1B** illustrates a block diagram of a computer system including a plurality of sockets having an encryption circuit according to embodiments of the disclosure.
**Figure 2** illustrates a block diagram of an encryption circuit according to embodiments of the disclosure.
**Figure 3** is a flow diagram illustrating operations of a method of live migrating a virtual machine from a first computer system to a second computer system via a network according to embodiments of the disclosure.
**Figure 4** is a swimlane diagram illustrating operations of a method of live migrating a virtual machine from a first computer system to a second computer system via a network according to embodiments of the disclosure.
**Figure 5** illustrates an encryption procedure and the override used to change an encryption engine circuit to an address independent encryption mode according to embodiments of the disclosure.
**Figure 6** is a flow diagram illustrating operations of a method of live migrating a virtual machine with a software supplied offset encryption from a first computer system to a second computer system via a network according to embodiments of the disclosure.
**Figure 7** is a swimlane diagram illustrating operations of a method of live migrating a virtual machine with a software supplied offset encryption from a first computer system to a second computer system via a network according to embodiments of the disclosure.
**Figure 8** illustrates an example format for a model (e.g., machine) specific register indicating the capabilities of an encryption circuit according to embodiments of the disclosure.
**Figure 9** illustrates an example format for a model (e.g., machine) specific register to control the functionality of an encryption circuit according to embodiments of the disclosure.
**Figure 10** illustrates an example format for a data structure used by software to manage a key associated with a key identification (e.g., KeyID) value for an encryption circuit according to embodiments of the disclosure.
**Figure 11** is a block flow diagram illustrating operations of a method of processing a memory request with an encryption circuit according to embodiments of the disclosure.
**Figure 12** is a block flow diagram illustrating operations of a method of live migrating a virtual machine from a first computer system to a second computer system via a network according to embodiments of the disclosure.
**Figure 13A** is a block diagram illustrating a generic vector friendly instruction format and class A instruction templates thereof according to embodiments of the disclosure.
**Figure 13B** is a block diagram illustrating the generic vector friendly instruction format and class B instruction templates thereof according to embodiments of the disclosure.
**Figure 14A** is a block diagram illustrating fields for the generic vector friendly instruction formats in Figures 13A and 13B according to embodiments of the disclosure.
**Figure 14B** is a block diagram illustrating the fields of the specific vector friendly instruction format in Figure 14A that make up a full opcode field according to one embodiment of the disclosure.
**Figure 14C** is a block diagram illustrating the fields of the specific vector friendly instruction format in Figure 14A that make up a register index field according to one embodiment of the disclosure.
**Figure 14D** is a block diagram illustrating the fields of the specific vector friendly instruction format in Figure 14A that make up the augmentation operation field 1350 according to one embodiment of the disclosure.
**Figure 15** is a block diagram of a register architecture according to one embodiment of the disclosure.
**Figure 16A** is a block diagram illustrating both an exemplary in-order pipeline and an exemplary register renaming, out-of-order issue/execution pipeline according to embodiments of the disclosure.
**Figure 16B** is a block diagram illustrating both an exemplary embodiment of an in-order architecture core and an exemplary register renaming, out-of-order issue/execution architecture core to be included in a processor according to embodiments of the disclosure.
**Figure 17A** is a block diagram of a single processor core, along with its connection to the on-die interconnect network and with its local subset of the Level 2 (L2) cache, according to embodiments of the disclosure.
**Figure 17B** is an expanded view of part of the processor core in Figure 17A according to embodiments of the disclosure.
**Figure 18** is a block diagram of a processor that may have more than one core, may have an integrated memory controller, and may have integrated graphics according to embodiments of the disclosure.
**Figure 19** is a block diagram of a system in accordance with one embodiment of the present disclosure.
**Figure 20** is a block diagram of a more specific exemplary system in accordance with an embodiment of the present disclosure.
**Figure 21****,** shown is a block diagram of a second more specific exemplary system in accordance with an embodiment of the present disclosure.
**Figure 22****,** shown is a block diagram of a system on a chip (SoC) in accordance with an embodiment of the present disclosure.
**Figure 23** is a block diagram contrasting the use of a software instruction converter to convert binary instructions in a source instruction set to binary instructions in a target instruction set according to embodiments of the disclosure.

### DETAILED DESCRIPTION

In the following description, numerous specific details are set forth. However, it is understood that embodiments of the disclosure may be practiced without these specific details. In other instances, well-known circuits, structures, and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

A (e.g., hardware) processor (e.g., having one or more cores) may execute instructions (e.g., a thread of instructions) to operate on data, for example, to perform arithmetic, logic, or other functions. For example, software may request an operation and a hardware processor (e.g., a core or cores thereof) may perform the operation in response to the request. Certain operations include accessing one or more memory locations, e.g., to store and/or read (e.g., load) data. A system may include a plurality of cores, e.g., with a proper subset of cores in each socket of a plurality of sockets, e.g., of a system-on-a-chip (SoC). Each core (e.g., each processor or each socket) may access data storage (e.g., a memory). Memory may include volatile memory (e.g., dynamic random-access memory DRAM) or (e.g., byte-addressable) persistent (e.g., non-volatile) memory (e.g., non-volatile RAM) (e.g., separate from any system storage, such as, but not limited, separate from a hard disk drive). One example of persistent memory is a dual in-line memory module (DIMM) (e.g., a non-volatile DIMM) (e.g., an Intel^{®} Optane^{™} memory), e.g., accessible according to a Peripheral Component Interconnect Express (PCI-e.) standard.

Certain systems (e.g., processors) utilize encryption of data to provide security. For example, a processor (e.g., as an instruction set architecture (ISA) extension) may support total memory encryption (TME) (for example, memory encryption with a single ephemeral key) and/or multiple-key TME (MKTME) (for example, memory encryption that supports the use of multiple keys for page granular memory encryption, e.g., with additional support for software provisioned keys).

In certain embodiments, TME provides the capability to encrypt the entirety of the physical memory of a system. For example, with this capability enabled in the very early stages of the boot process with a small change to hardware initialization manager code (e.g., Basic Input/Output System (BIOS) firmware). In certain embodiments, once TME is configured and locked in, it will encrypt all the data on external memory buses of a SoC using an encryption standard/algorithm (e.g., an Advanced Encryption Standard (AES), such as, but not limited to, one using 128-bit keys). In certain embodiments, the encryption key used for TME uses a hardware random number generator implemented in the SoC (e.g., processor), and the key(s) are not accessible by software or by using external interfaces to the SoC. In certain embodiments, TME capability is intended to provide protections of encryption to external memory buses and/or DIMMs.

In certain embodiments, multi-key TME (MKTME) builds on TME and adds support for multiple encryption keys. In certain embodiments, the SoC implementation supports a fixed number of encryption keys, and software can configure an SoC to use a subset of available keys. In certain embodiments, software manages the use of keys and can use each of the available keys for encrypting any section (e.g., page) of the memory. Thus, certain embodiments of MKTME allow page granular encryption of memory. In one embodiment (e.g., by default), MKTME uses the TME encryption key unless explicitly specified by software. In addition to supporting a processor (e.g., central processing unit (CPU) generated ephemeral key (e.g., not accessible by software or by using external interfaces to an SoC), embodiments of MKTME also support software provided keys. In certain embodiments, software provided keys are particularly useful when used with non-volatile memory or when combined with attestation mechanisms and/or used with key provisioning services. In certain embodiments, a tweak key used for MKTME is supplied by software. Certain embodiments (e.g., platforms) herein use TME and/or MKTME to prevent an attacker with physical access to the machine from reading memory (e.g., and stealing any confidential information therein). In one embodiment, an AES-XTS standard is used as the encryption algorithm to provide the desired security.

In a virtualization scenario, certain embodiments herein allow a virtual machine monitor (VMM) or hypervisor to manage the use of keys to transparently support (e.g., legacy) operating systems without any changes (e.g., such that MKTME can also be viewed as TME virtualization in such a deployment scenario). In certain embodiments, an operating system (OS) is enabled to take additional advantage of MKTME capability, both in native and virtualized environments. In certain embodiments, MKTME is available to each guest OS in a virtualized environment, and the guest OS can take advantage of MKTME in the same ways as a native OS.

In certain embodiments, a user (e.g., cloud security provider) utilizes encryption for the cryptographic isolation for the (e.g., their customer's) workloads running on their platform. Certain embodiments herein utilize multi-key total memory encryption (MKTME) which provides cryptographic isolation to workload data in memory by allowing the use of different keys for different workloads.

In a networked (e.g., cloud) environment, a user (e.g., their customers') workloads running on virtual machines (VMs) may be required to be migrated from one machine (e.g., computer system) to another machine (e.g., computer system) in the networked (e.g., cloud) environment, e.g., to ensure availability and guaranteed service time through load balancing. In certain embodiments, live (or substantially live or human-perceptibly live) migration allows virtual machines (VMs) to be transferred from one host (e.g., computer system) to another host (e.g., computer system) while still running, e.g., appearing mostly seamless for users of the VM. In certain embodiment, live migration requires data to be sent over potentially insecure networks.

In certain embodiments, a server message block (SMB) protocol uses Advanced Encryption Standard (AES) extensions to encrypt VM memory before transferring it over the network. Then, on the new host, the hardware processor core (e.g., CPU) is again used for decryption. With this solution, the hardware processor core (e.g., CPU) is involved in the encryption and/or decryption of VM data (e.g., and VM code) in certain embodiment, for example, where the hardware processor core (e.g., CPU) on the sending host (from where the VM is migrated from) encrypts the VM data (e.g., and VM code) and the hardware processor core (e.g., CPU) on the receiving host decrypts the VM data (e.g., and VM code) before storing it in memory and allowing execution to continue.

In certain embodiments, a hardware processor core (e.g., central-processing unit (CPU)) will perform encryption but this ties up valuable resources and increases the overall time to complete a migration. For live migration specifically, there are requirements to complete the migration within a specified time to ensure that the VM execution appears uninterrupted to the end user in certain embodiments, e.g., where this keeps a user (e.g., cloud provider) from implementing secure Server Message Block (SMB) or encrypted remote direct memory access (RDMA) in a data center. In one embodiment, SMB operates using RDMA, but disables encryption in this mode. Attackers can use these deployment limitations to launch novel attacks on a computer system (e.g., server).

In certain embodiments, encryption and/or decryption by the hardware processor core (e.g., CPU) is slow and blocks other threads that could be operating on the hardware processor core (e.g., CPU), such as the VM being transferred. This significantly impacts the capability to offer live migration support as the latencies required for encryption and decryption can be significant. For example, with a core spending around a cycle for each word and a VM spanning multiple gigabytes, this means it will take millions of cycles to complete the migration whereas certain embodiments herein only take an order of thousands of cycles. Using a scatter/gather direct memory access (DMA) improves this even further in certain embodiments.

In order to avoid such grave slowdowns, certain users completely disable encryption and transfer VM memory unencrypted (e.g., in cleartext form) for live migration scenarios. While this meets the performance requirements of live migration, it comes at the expense of security.

Embodiments herein are directed to encrypted remote direct memory access (eRDMA) for live migration of a virtual machine. Embodiments herein utilize an (e.g., MKTME) encryption circuit for live migration of a virtual machine. Embodiments herein are directed to a secure RDMA architecture using MKTME (m-RDMA). Embodiments herein include a new mode for a (e.g., MKTME) encryption circuit, e.g., which is used for improving the performance of encrypted RDMA support, minimizing, or eliminating the burden on the processor core (e.g., CPU) to support this technology, and allowing for widespread deployment. Embodiments herein are extended for Trust Domain Extensions (TDX), e.g., as a form of VM isolation. Embodiments herein enable a critical functionality of live migration at high performance while maintaining security. For example, allowing hosts to use benefits of RDMA while keeping data encrypted on the network thereby meeting both performance and security requirements in live migration scenarios. Embodiments herein are directed to methods and apparatuses for supporting encrypted remote direct memory access (ERDMA) for VM live migration using MKTME. Although the term encryption is used throughout, it should be understood that decryption is also achievable according to the embodiments herein, e.g., an encryption circuit includes decryption circuitry in certain embodiments. Embodiments herein use encryption circuitry/modes disclosed herein (e.g., and RDMA circuitry) to free up the hardware processor cores (e.g., CPUs) to perform other tasks and is also faster overall than hardware processor cores (e.g., CPUs) performed encryption. Embodiments herein enable secure RDMA (e.g., and without involving an operating system (OS)) to allow for fast and secure migration of workloads in a cloud environment. Embodiments herein do not compromise security for performance or performance for security, thereby making a critical piece for confidential computing infrastructure.

In certain embodiments, direct memory access (DMA) circuitry allows peripherals (e.g., network interface controllers) on the computer system (e.g., host) to read, write, and copy data from/to memory without using resources of the hardware processor core (e.g., CPU). In certain embodiments, remote direct memory access (RDMA) circuitry simulates the benefits of DMA across a network, for example, by programming a NIC to use DMA features of a platform to copy memory across the network, which is received by an RDMA-capable machine. In certain embodiments, total memory encryption (TME) encrypts memory coming out of a socket, for example, where the memory is then decrypted when it is retrieved, so that in the cache and registers, all data is in plaintext. In one embodiment, TME uses a single random key to encrypt all memory. In certain embodiment, Multiple Key Total Memory Encryption (MK-TME) extends TME to add support for multiple keys and allows for the ability to program keys to be used by the encryption circuit. In one embodiment, these keys are chosen by setting bits in the hardware physical address (HPA). Embodiments herein perform DMAs and RDMAs on memory that is encrypted with MK-TME to greatly improve the performance of live migrations while still remaining secure.

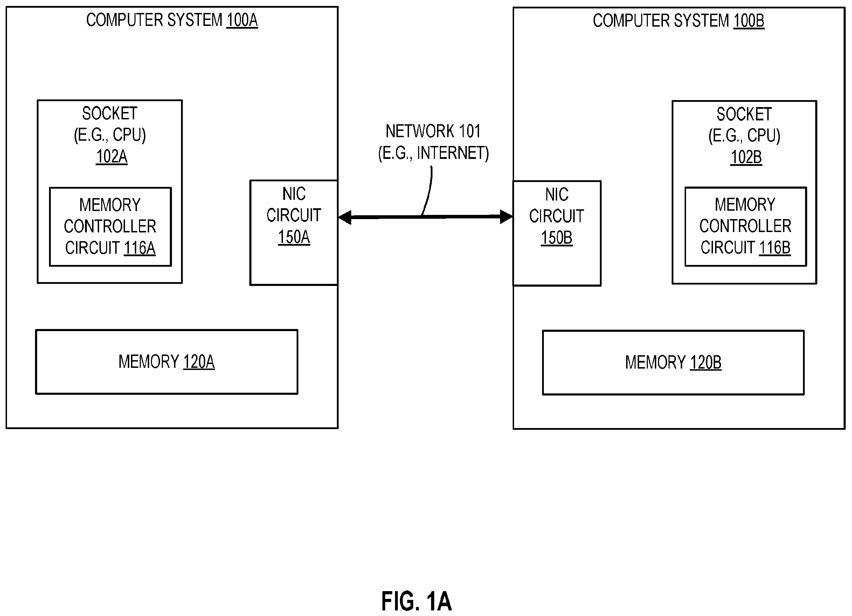

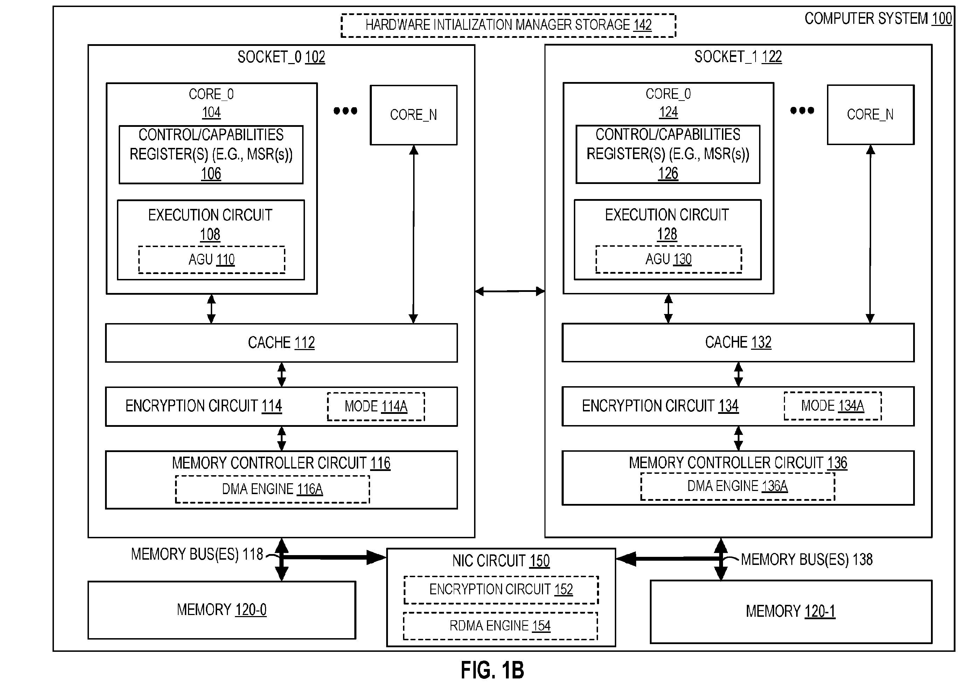

Turning now to Figure 1, an example system architecture is depicted. **Figure 1A** illustrates a first computer system 100A coupled to a second computer system 100B via a network 101 (e.g., the internet) according to embodiments of the disclosure. In certain embodiments, each of the computer systems 100A-B are within a single cloud provider, e.g., but at different geographical locations. In certain embodiments, each computer (e.g., computing) system includes a socket (e.g., having a CPU therein), for example, computer system 100A including socket 102A and computer system 100B including socket 102B. In certain embodiments, each of the computer systems includes a memory controller circuit 116 to control memory access (e.g., reads and/or writes), for example, with socket 102A including memory controller circuit 116A (e.g., for memory accesses to memory 120A and/or any other memory of computer system 100A) and socket 102B including memory controller circuit 116B (e.g., for memory accesses to memory 120B and/or any other memory of computer system 100B). In certain embodiments, each of the computer systems includes a network interface controller (NIC) circuit to control the sending and/or receiving of data over the network, for example, with NIC circuit 150A of computer system 100A and NIC circuit 150B of computer system 100B managing data transfer therebetween over the network 101.

Although two computer systems are shown, it should be understood that any number of computer systems can be connected via the network 101 in certain embodiments.

**Figure 1B** illustrates a block diagram of a computer system 100 including a plurality of sockets 102, 122 having an encryption circuit (114, 134, respectively) according to embodiments of the disclosure. Computer system 100A and/or computer system 100B of Figure 1A may be an instance of computer system 100 in Figure 1B.

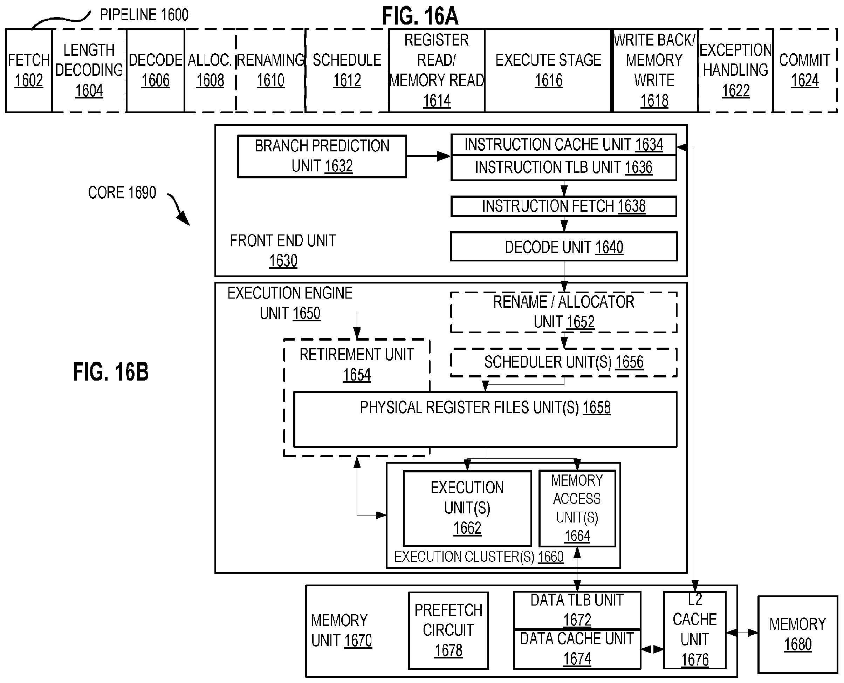

Although two sockets are shown, a single socket or any plurality of sockets may be utilized. In Figure 1, socket_0 102 includes a core_0 104 and socket_1 122 includes a core_0 124. A core may be any hardware processor core, e.g., as an instance of core 1690 in Figure 16B. Although multiple cores are shown, each socket may have a single or any plurality of cores (e.g., where N is any positive integer greater than 1). Each socket may have an identification value, e.g., "socket ID".

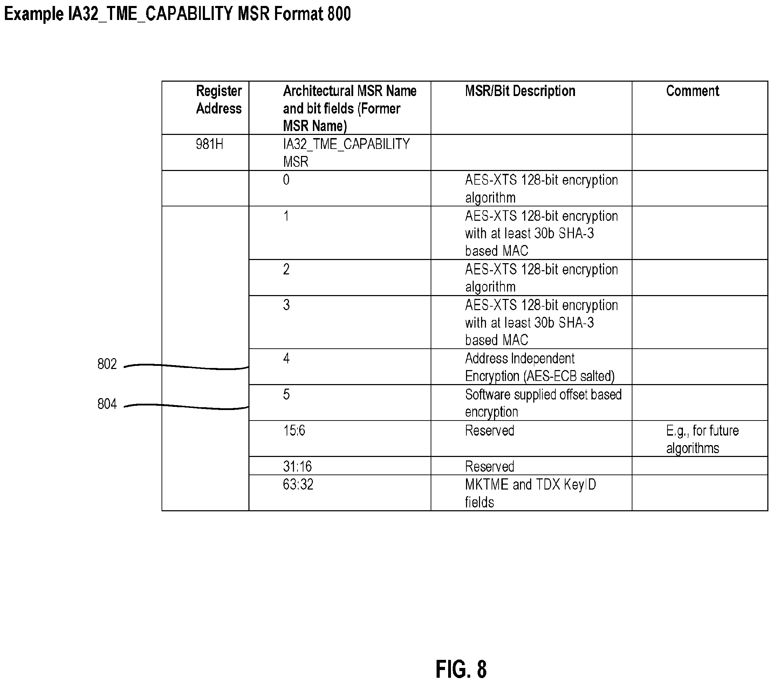

Computer system 100 includes control/capabilities register(s). In one embodiment, each of control/capabilities register(s) 106 of socket 102 includes a same data as corresponding control/capabilities register(s) 126 of socket 122. In one embodiment, a single set of control/capabilities register(s) 106 is utilized for computer system 100. Example control/capabilities registers are discussed below in reference to Figures 8-9. In certain embodiments, control/capabilities registers store the control values and/or capability indicating values of an encryption circuit or other component. For example, where capabilities registers store value(s) (e.g., provided by execution of hardware initialization manager storage 142) that indicate the functionality that a corresponding encryption circuit is capable of.

Memory access (e.g., store or load) request may be generated by a core, e.g., a memory access request may be generated by execution circuit 108 of core 104 (e.g., caused by the execution of an instruction) and/or a memory access request may be generated by execution circuit 128 of core 124 (e.g., caused by the execution of an instruction). In certain embodiments, a memory access request is serviced by a cache, e.g., cache 112 for socket 102 and/or cache 132 for socket 122. Additionally or alternatively (e.g., for a cache miss), memory access request may be serviced by memory separate from a cache, e.g., but not a disk drive.

In certain embodiments, computer system 100 includes an encryption circuit (e.g., that utilizes encryption for live migration of a virtual machine as disclosed herein). In one embodiment, a single encryption circuit is utilized for both sockets 102, 122 of computer system 100. In certain embodiments, an encryption circuit includes a control to set it into a particular mode, for example, mode 114A to set encryption circuit 114 into a particular mode (e.g., as discussed below) and mode 134A to set encryption circuit 134 into a particular mode (e.g., as discussed below). In certain embodiments, a mode implements encryption for a live migration of a virtual machine from a first computer system to a second computer system via a network.

In certain embodiments, encryption circuit is separate from a processor core, for example, as an offload circuit controlled by a command sent from processor core, e.g., encryption circuit 114 separate from any cores and encryption circuit 134 separate from any cores. Encryption circuit 114 of socket 102 may receive a memory access (e.g., store) request from one or more of its cores (e.g., from address generation unit 110 of execution circuit 108) and/or encryption circuit 134 of socket 122 may receive a memory access (e.g., store) request from one or more of its cores (e.g., from address generation unit 130 of execution circuit 128). Encryption circuit may, e.g., for an input of a destination address and text to be encrypted (e.g., plaintext) (e.g., and a key), perform an encryption to generate a ciphertext (e.g., encrypted data). The ciphertext may then be stored in storage, e.g., in memory 120 and/or memory 140. An encryption circuit may perform a decryption operation, e.g., for a memory load request.

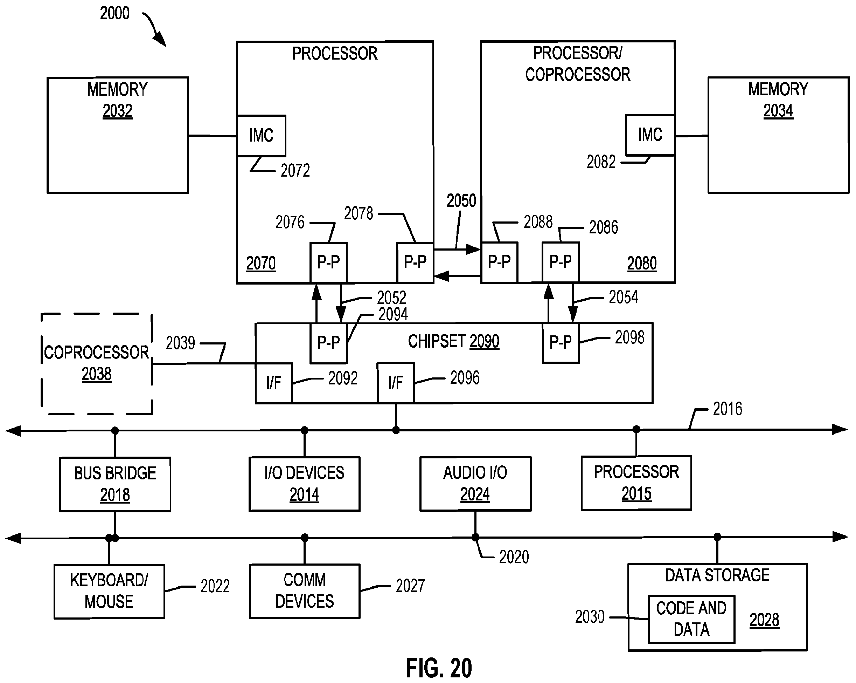

In certain embodiments, computer system 100 includes a memory controller circuit. In one embodiment, a single memory controller circuit is utilized for a plurality of sockets of computer system 100. Memory controller circuit 116 of socket 102 may receive an address for a memory access request, e.g., and for a store request also receiving the payload data (e.g., ciphertext) to be stored at the address, and then perform the corresponding access into memory 120, e.g., via one or more memory buses 118. Memory controller circuit 136 of socket 122 may receive an address for a memory access request, e.g., and for a store request also receiving the payload data (e.g., ciphertext) to be stored at the address, and then perform the corresponding access into memory 140, e.g., via one or more memory buses 138. Each memory controller (MC) may have an identification value, e.g., "MC ID". Memory and/or memory bus(es) (e.g., a memory channel thereof) may have an identification value, e.g., "channel ID". Each memory device (e.g., non-volatile memory 120B device and non-volatile memory 140B device) may have its own channel ID. Each socket (e.g., of a single SoC) may have an identification value, e.g., "socket ID". In certain embodiments, memory controller 116 includes a direct memory access engine 116A, e.g., for performing memory accesses into memory 120-0 (or memory 120-1) and/or memory controller 136 includes a direct memory access engine 136A, e.g., for performing memory accesses into memory 120-1 (or memory 120-0). Memory may be a volatile memory (e.g., DRAM), non-volatile memory (e.g., non-volatile DIMM or non-volatile DRAM), and/or secondary (e.g., external) memory (e.g., not directly accessible by a processor), for example, a disk (or solid state) drive (e.g., storage unit 2028 in Figure 20).

In certain embodiments, computer system 100 includes a NIC circuit 150, e.g., to transfer data over a network (e.g., network 101 in Figure 1). In certain embodiments, a NIC circuit 150 includes an encryption (and/or decryption) circuit 152, e.g., to encrypt (and/or decrypt) data, but without a core and/or encryption (or decryption) circuit of a socket (e.g., processor die) performing the encryption (or decryption). In the case where a NIC circuit that is supplied by a different vendor (e.g., manufacturer) than a socket (e.g., processor), the NIC circuit is viewed as a security risk for the vendor (e.g., manufacturer) of the socket in certain embodiments. In certain embodiments, encryption (and decryption) performed by NIC circuit 150 is enabled or disabled (e.g., via a request sent by socket). In certain embodiments, NIC circuit 150 includes a remote DMA engine 154, e.g., to send the data (e.g., VM data and VM code) for a live migration of a virtual machine from a first computer system to a second computer system via a network.

In one embodiment, the hardware initialization manager (non-transitory) storage 142 stores hardware initialization manager firmware (e.g., or software). In one embodiment, the hardware initialization manager (non-transitory) storage 142 stores Basic Input/Output System (BIOS) firmware. In another embodiment, the hardware initialization manager (non-transitory) storage 142 stores Unified Extensible Firmware Interface (UEFI) firmware. In certain embodiments (e.g., triggered by the power-on or reboot of a processor), computer system 100 (e.g., core 104) executes the hardware initialization manager firmware (e.g., or software) stored in hardware initialization manager (non-transitory) storage 142 to initialize the system 100 for operation, for example, to begin executing an operating system (OS) and/or initialize and test the (e.g., hardware) components of system 100.

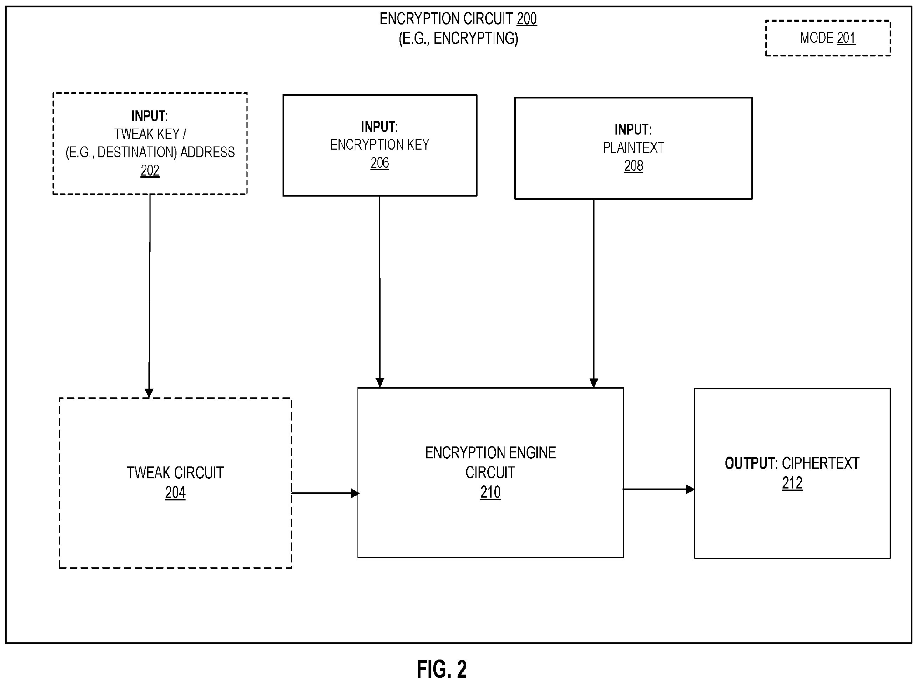

**Figure 2** illustrates a block diagram of an encryption circuit 200 (e.g., set into a particular mode 201) according to embodiments of the disclosure. An encryption circuit herein may be an instance of encryption circuit 200. In certain embodiments, encryption circuit 200 (for example, in response to a request to encrypt, e.g., an encrypt data for storage request), receives an input 202 of a destination address (e.g., address "A") (e.g., the destination address for plaintext 208). In certain embodiments, encryption circuit 200 also receives an input 202 of a tweak key, e.g., and sends it to tweak circuit 204. Tweak circuit 204 may then perform a tweak operation (e.g., using a tweak key 202) on the address to generate a resultant tweak value (e.g., for use in a decryption). Tweak operation may be a tweak according to an encryption standard, e.g., according to an AEX-XTS standard. In certain embodiments, tweak circuit 204 is a part of encryption engine circuit 210.

In certain embodiments, encryption engine circuit 210 performs one or more encryption operations (e.g., according to an encryption standard) to the input 208 of plaintext (e.g., and an input of the tweak value from tweak circuit 204 and/or and an input of an encryption key 206) to generate a resulting output 212 of ciphertext. Encryption key 206 may be an encryption key according to an encryption standard (e.g., an AES encryption key).

Encryption circuit 200 may perform a decryption operation, e.g., for a memory load request. For example, in one embodiment, encryption circuit 200 in decryption mode (for example, in response to a request to decrypt, e.g., a decrypt data from storage request), receives as inputs: (optionally) a tweak value (e.g., from tweak circuit 204), encryption key 206, and ciphertext 212, and then generates the plaintext 208 therefrom.

Certain embodiments herein utilize an encryption circuit (e.g., MKTME circuit) for a secure RDMA transfer of data between two systems (e.g., hosts). This mode may be set in a system, e.g., by setting mode 201 in encryption circuit. One new mode is a position-independent encryption mode (e.g., as discussed below). Another new mode is a software supplied offset based encryption mode (e.g., as discussed below). A mode (e.g., either of the above two modes) modes are enabled through extensions to an x86 MKTME instruction set architecture (ISA). More specifically, in certain embodiments the mode(s) are enumerated and activated using a TME MSRs and/or used by software through extensions to a platform configuration (PCONFIG) instruction. In certain embodiments, a PCONFIG instruction (e.g., when executed by a core) is used to execute functions for configuring platform features, e.g., where register (e.g., EAX) indicates the (e.g., leaf) function to be invoked and register(s) (e.g., RBX/RCX/RDX) indicate the (e.g., leaf) specific purpose. In certain embodiments, PCONFIG instruction is a package scoped instruction, e.g., needs to be executed once per physical package to configure the desired platform feature (e.g., MKTME feature).

In certain embodiments, a MKTME encryption circuit maintains an internal key table not accessible by software to store the information (e.g., key and encryption mode) associated with each KeyID (e.g., a corresponding KeyID for a corresponding encrypted memory block/page) (for example, where a key ID is incorporated into the physical address, e.g., in the page tables, and also in every other storage location such as the caches and TLB). In one embodiment, each KeyID is associated with one or three encryption modes: (i) encryption using the key specified, (ii) do not encrypt at all (e.g., memory will be plain text), or (iii) encrypt using the TME Key. In certain embodiments, unless otherwise specified by software, MKTME uses a hardware-generated ephemeral key by default which is inaccessible by software or external interfaces, e.g., and MKTME also supports software-provided keys.

In certain embodiments, the PCONFIG is used to program KeyID attributes for MKTME.

**Table 1 below indicates an example MKTME Key Table:**

| KeyID | Key | Encryption Mode |
|---|---|---|
| (entry 1) | (entry 1) | (entry 1) |
| (entry 2) | (entry 2) | (entry 2) |

**Table 2 below indicates example PCONFIG Leaf Encodings:**

| Leaf | Encoding | Description |
|---|---|---|
| MKTME _KEY_PROGRAM | 0x00000000 | This leaf is used to program the key and encryption mode associated with a KeyID. |
| RESERVED | 0x00000001-0xFFFFFFFF | Reserved for future use (#GP(0) if used). |

**Table 3 below indicates example PCONFIG targets (e.g., MKTME encryption circuit):**

| Target Identifier | Value | Description |
|---|---|---|
| INVALID_TARGET | 0x00000000 | Invalid target identifier |
| MKTME | 0x00000001 | Multi-Key Total Memory Encryption Engine |
| RESERVED | 0x00000002-0xFFFFFFFF | Reserved for future use. |

In certain embodiments of a position-independent encryption mode, VM data (and VM code) is written out encrypted to a migration buffer using a mode where encrypted data is independent of the (e.g., physical) address it is stored in, for example, and this encrypted data is then sent to the receiving host using RDMA which treats the data as plaintext but since the data is already protected using encryption, it is effectively secured in transition.

In certain embodiments of a software supplied offset based encryption mode, a software supplied offset is used to encrypt data where the receiving hypervisor (e.g., of the second host) shares the position and the key to be used for VM data (or VM code) with the sending hypervisor, for example, where on the sending host, the VM data (or VM code) is encrypted using the receiving machine's offset and key. For example, where software can then RDMA the encrypted VM memory assuming it to be plaintext..

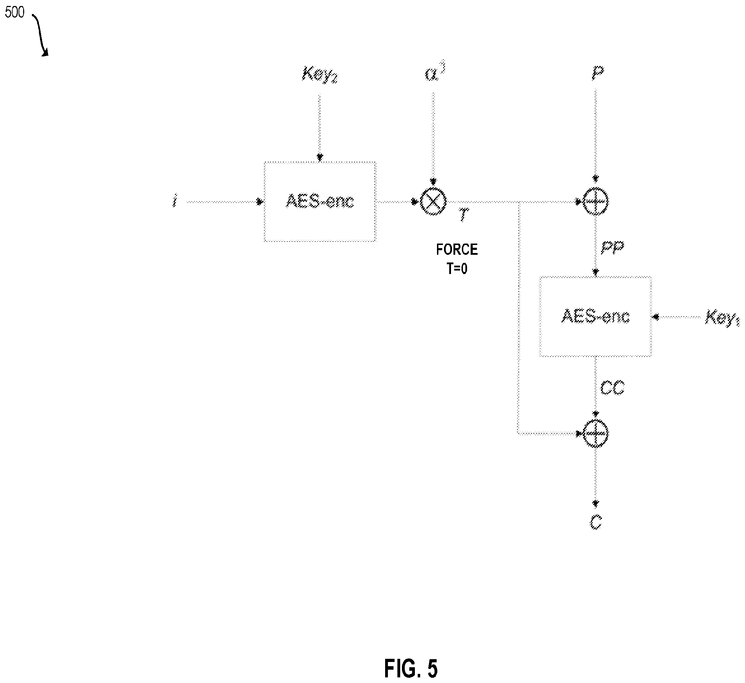

In one embodiment, encryption circuit 200 operates according to an encryption standard (e.g., AES-XTS), e.g., while in MKTME mode. In one embodiment, AES-XTS encryption comprises:
1. T ← AES(tweak_key, tweak)
2. PP ←P XOR T
3. CC ← AES(data_key, PP)
4. C ← CC XOR T
Where, AES is encrypting according to an AES standard, P is the plaintext to be encrypted, and C is the final ciphertext for plaintext P. This may be modified in certain modes, e.g., as discussed in reference to Figure 5.

In order to ensure spatial uniqueness across the memory space, certain encryption (and decryption) processes utilize a system physical address to tweak the encryption, e.g., to ensure that same plaintext when encrypted and stored at different physical locations in memory gets a different ciphertext (e.g., to inhibit frequency analysis from an attacker with physical access to the machine which can result in leaking plaintext).

In certain embodiments, tweak used in (1.) is generated based on the (e.g., physical) address where the plaintext is to be stored, e.g., to ensure that same data at different memory locations does not get encrypted to the same ciphertext (hence the name, tweak). In certain embodiments, the position dependent encryption (e.g., required from a security perspective), creates functional issues when migrating a virtual machine from a first computer system to a second computer system via a network, and thus a position independent encryption is utilized (e.g., position-independent encryption mode).

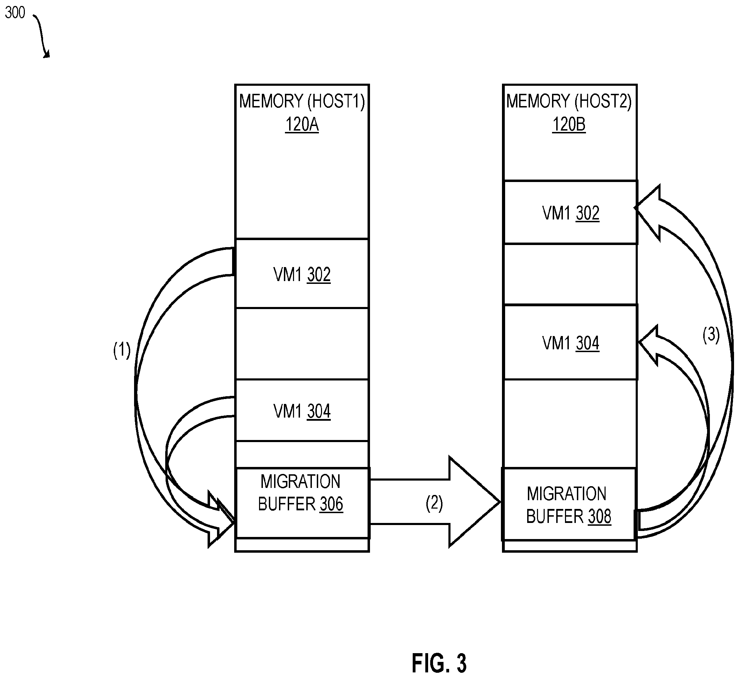

**Figure 3** is a flow diagram illustrating operations 300 of a method of live migrating a virtual machine from a first computer system (e.g., host) to a second computer system (e.g., host) via a network (e.g., network 101 in Figure 1) according to embodiments of the disclosure. In certain embodiments, a virtual machine (VM1) is executing on a first host out of memory 120A, for example, with VM1 including one or more blocks of memory 120A (e.g., block 302 of VM code and block 304 of VM data that the executing code is working on). In certain embodiments, it is desired to (e.g., live) migrate VM1 from the first computer system (and thus first memory 120A) to a second computer system (and thus second memory 120B).

In certain embodiments, a (e.g., MKTME) encryption circuit (e.g., encryption circuit 114 in Figure 1B) is leveraged to provide cryptographic support to accelerate live migration. In certain embodiments, during (e.g., live) VM migration, the VM's memory 302, 304 is copied (e.g., as shown by arrow (1)) to a migration buffer 306, e.g., page-by-page. In certain embodiments, the migration buffer 306 of the first host is mapped for writing with a transfer key. In certain embodiments, the VM's memory 302, 304 (e.g., page) (e.g., encrypted with the transfer key and stored into migration buffer 306) is then copied (e.g., as shown by arrow (2)) from the migration buffer 306 to the new host with RDMA. In certain embodiments, the new host receives the "transfer key" encrypted data into its own migration buffer 308 that is mapped with the same transfer key. In certain embodiments, the new host can then copy (e.g., as shown by arrow (3)) the encrypted data into the desired place in memory 120B to start the VM on the new host. Mapping these pages this way effectively uses the existing MK-TME engine to decrypt the VM's data from its current key, re-encrypts with a transfer key to send over the network, then re-encrypt with a new live key on the new host in certain embodiments.

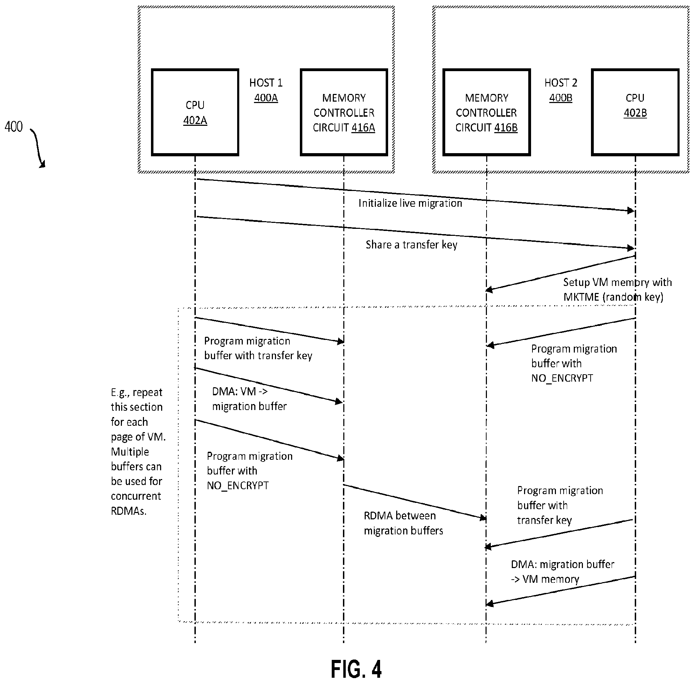

**Figure 4** is a swimlane diagram illustrating operations 400 of a method of live migrating a virtual machine from a first computer system (e.g., host 400A) to a second computer system (e.g., host 400B) via a network (e.g., network 101 in Figure 1) according to embodiments of the disclosure.

In certain embodiments, a virtual machine is running on first host 400A and is set to be migrated to second host 400B. The following is an example of operations 400 that are used to copy (e.g., a single page of) the VM to the new host so the new host can execute the VM from that same point. In this example, the first host 400A (e.g., a hardware processor (e.g., CPU 402A) of the host 400A) is to send an indication to the second host 400B that a live migration is to be performed. In certain embodiments, the first subset of operations includes (e.g., as shown as arrow (1) in Figure 3), the first host 400A (e.g., a hardware processor (e.g., CPU 402A) of the host 400A) generates a "transfer" cryptographic key to share between hosts, sends the "transfer" key to the second host, set the KeyID for the migration buffer in first host 400A to use the "transfer" key, the host 400A performs a DMA (e.g., by memory controller circuit 416A) to send the VM's memory to the migration buffer in first host 400A, and this DMA will decrypt the VM's memory from the previously used key and re-encrypt the data into the migration buffer with the transfer key (or any combination of the above). In certain embodiments, the second subset of operations includes (e.g., as shown as arrow (2) in Figure 3), setting that the data transfer between the first host 400A and the second host 400B will not utilize further encryption (e.g., an encryption circuit of NIC circuit/RDMA engine of the first host 400A will not utilize encryption) (e.g., set NO_ENCRYPT on HOST1 and HOST2's migration buffers), RDMA the (e.g., data encrypted by the transfer key and in the) buffer to the new host. In certain embodiments, because NO_ENCRYPT is used, no further encryption operation will be performed on the data, e.g., the data in memory is already encrypted, so the data will stay encrypted in transfer. In certain embodiments, second host 400B will store the transferred data into its migration buffer encrypted as well because no decryption operation is performed in this step (e.g., an encryption circuit of NIC circuit/RDMA engine of the second host 400B will not utilize decryption). In certain embodiments, the third subset of operations includes (e.g., as shown as arrow (3) in Figure 3), the second host 400B (e.g., a hardware processor (e.g., CPU 402B) of the host 400B) sets the encryption key (e.g., KeyID in MKTME circuit) to use the transfer key for the migration buffer in host 400B, DMAs (e.g., by memory controller circuit 416B) the encrypted data into the desired location (e.g., pages) for the new VM (e.g., using a new local key for the VM). In certain embodiments, this DMA by second host 400B decrypts the data from the transfer key and re-encrypt with the VM's new key. In certain embodiments, a MKTME-enabled VM on second host 400B can now use the new key to resume operation on the new host.

### Position (e.g., Address) Independent Encryption mode (e.g., using MKTME Circuitry)

In certain embodiments, the encryption of (e.g., each block of) memory uses its physical address as the offset. To ensure that the same ciphertext can be decrypted on both HOST1 and HOST2, memory must be transferred to the same physical address in certain embodiments, for example, where to ensure this occurs, the hypervisor must allocate a buffer with the same host physical address (HPA) offset, e.g., these buffers being used as the migration buffers. In certain embodiments, the migration buffers are allocated at boot and all hypervisors use the same offset. While this scheme works, it places requirements to take memory away at boot time for the migration buffer. If on the other hand, memory for the buffer is not taken at boot, software might not always be able to free up memory at the same location at runtime owing to fragmentation. Hence, while the above scheme works in certain embodiments, it can introduce artificial limitations. Certain embodiments herein utilize address independent encryption mode to address this limitation.

In certain embodiments of this mode, software sets up the migration buffer on HOST1 and HOST2 to use position independent encryption. For example, where on HOST1, the VM memory read is decrypted with the VM's key and written to the migration buffer using address independent encryption. In certain embodiments of this mode, MKTME engine does not use physical address as a tweak and instead encrypts data directly with the transfer key using an encryption mode without tweak, such as, but not limited to an electronic codebook (ECB) mode. In certain embodiments of MKTME hardware, the ECB mode is constructed by an extension to XTS hardware as shown in Figure 5.

**Figure 5** illustrates an encryption procedure 500 and the override (e.g., forcing tweak (T) to be zero) used to change an encryption engine circuit to an address independent encryption mode according to embodiments of the disclosure. Figure 5 illustrates an example AES-XTS encryption procedure and the override of forcing T=0 changes the mode to address independent ECB mode. See the discussion of AES-XTS encryption above.

In certain embodiments of this mode, the same data in all of VM memory will get encrypted to the same ciphertext and can increase possibility of frequency analysis from passive attackers. In order to prevent patterns from appearing in the ciphertext, the data transferred over can be encrypted using a random string (e.g., "salt") value. The salt value can be pre-agreed between HOST1 and HOST2 and can be mixed into the data (e.g., logically XORed with data) before encryption and incremented on every (e.g., 16B) block boundary. On the receiving end, the HOST2 can use the same salt to retrieve plaintext. For example, where after decryption, the salt is XORed to retrieve the plaintext before storing in memory. The operation to mix and remove the salt can be done by the MKTME hardware. Note that the salt can be combined with plaintext with any other reversible function other than XOR. Additionally, there can also be an authenticated encryption mode used to protect integrity of data transmitted.

In certain embodiments, when switching KeyIDs, the cache can hold two writes to the same memory location using different KeyIDs. Therefore, the migration buffer must be allocated in strongly uncacheable memory in certain embodiments. In embodiments where fixed, strongly uncacheable pages are limited, a number of rotating migration buffers are allocated, for example, where as an RDMA for a single page completes, the buffer can be reused to transfer another page. In certain embodiments, the number of these rotating buffers corresponds to network speed and VM size, e.g., as having too many would waste space with a slow network and having too few buffers may block RDMA because migration buffers may not be freed in time to transfer more pages.

As one example, using RDMA require the core (e.g., CPU) to only be called once every page (e.g., 4096 bytes) whereas using the core to encrypt the data in this example would cause the core to spend around a cycle for each word, meaning, without the embodiments herein, the core (e.g., CPU) spends about 1000 times more cycles during the encryption/decryption. As a VM can span multiple gigabytes, this will take millions of cycles to complete the migration in this example using the core to encrypt the data whereas, with encrypted RDMA, it only takes an order of thousands of cycles. Using scatter/gather DMA improve this even further in certain embodiments.

### Software Supplied Offset Encryption mode (e.g., using MKTME Circuitry)

In the examples depicted in Figures 3 and 4, a migration buffer is utilized on the receiving host (e.g., computer system). A modification to the MKTME Encryption circuit (e.g., and corresponding PCONFIG instruction) allows an encrypted RDMA transfer to skip the , the third subset of operations (e.g., as shown as arrow (3) in Figure 3) discussed above. More specifically, with certain embodiments of a software supplied offset encryption mode, data can be RDMAed to the right physical address on HOST2 using the key desired by the hypervisor on HOST2 for VM being migrated. In certain embodiments of a software supplied offset encryption mode, a MKTME encryption circuit accepts a parameter to use a software-supplied base physical offset and uses it for encrypting the VM image to be migrated. With this mode, the receiving host would not have to use migration buffers and instead could copy the memory directly into the desired location.

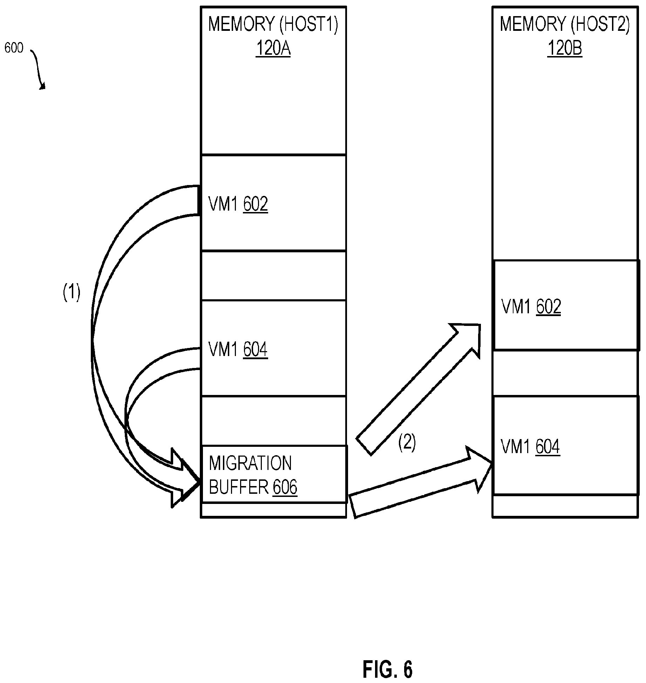

**Figure 6** is a flow diagram illustrating operations 600 of a method of live migrating a virtual machine with a software supplied offset encryption from a first computer system (e.g., host) to a second computer system (e.g., host) via a network (e.g., network 101 in Figure 1) according to embodiments of the disclosure.

In certain embodiments, a virtual machine (VM1) is executing on a first host out of memory 120A, for example, with VM1 including one or more blocks of memory 120A (e.g., block 602 of VM code and block 604 of VM data that the executing code is working on). In certain embodiments, it is desired to (e.g., live) migrate VM1 from the first computer system (and thus first memory 120A) to a second computer system (and thus second memory 120B).

In certain embodiments, a (e.g., MKTME) encryption circuit (e.g., encryption circuit 114 in Figure 1B) is leveraged to provide cryptographic support to accelerate live migration. In certain embodiments, during (e.g., live) VM migration, the VM's memory 602, 604 is copied (e.g., as shown by arrow (1)) to a migration buffer 606, e.g., page-by-page. In certain embodiments, the migration buffer 606 of the first host is mapped for writing with an encryption key sent by the second host. In certain embodiments, the VM's memory 602, 604 (e.g., page) (e.g., encrypted with the transfer key and stored into migration buffer 606) is then copied (e.g., as shown by arrow (2)) from the migration buffer 306 to the new host with RDMA. In contrast to Figure 3, the example shown in Figure 6 does not utilize a migration buffer in host 2 (e.g., in memory 120B), e.g., and instead copies the encrypted data into the desired place to start the VM on the new host.

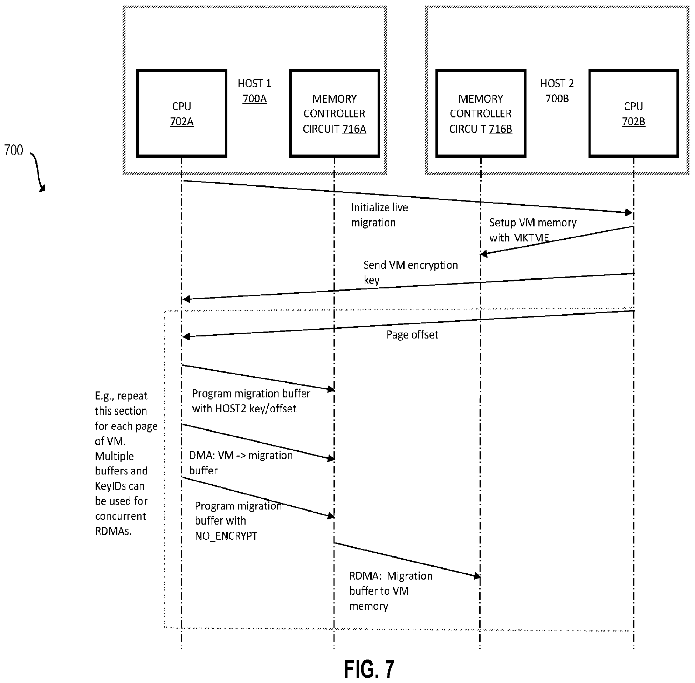

**Figure 7** is a swimlane diagram illustrating operations 700 of a method of live migrating a virtual machine with a software supplied offset encryption from a first computer system (e.g., host 700A) to a second computer system (e.g., host 700B) via a network (e.g., network 101 in Figure 1) according to embodiments of the disclosure.

In certain embodiments, a virtual machine is running on first host 700A and is set to be migrated to second host 700B. The following is an example of operations 700 that are used to copy (e.g., a single page of) the VM to the new host so the new host can execute the VM from that same point. In this example, the first host 700A (e.g., a hardware processor (e.g., CPU 702A) of the host 700A) is to send an indication to the second host 700B that a live migration is to be performed. In certain embodiments, the first subset of operations includes (e.g., as shown as arrow (1) in Figure 6), the second host 700B (e.g., a hardware processor (e.g., CPU 702B) of the host 400B) generates a cryptographic key and sends that key to the first host 700A (e.g., HOST2 tells HOST1 the key that will be used to store the VM and/or the offset of each page in memory), the first host 700A sets the KeyID for the migration buffer to use the key given by HOST2 (e.g., where this KeyID is also updated with the offset for each page copied), the first host 700A performs a DMA (e.g., by memory controller circuit 716A) to send the VM's memory to the migration buffer in first host 700A, and this DMA will decrypt the VM's memory from the previously used key and re-encrypt the data into the migration buffer with the key (e.g., and offset) provided by the second host 700B. In certain embodiments, the second subset of operations includes (e.g., as shown as arrow (2) in Figure 6), setting that the data transfer between the first host 700A and the second host 700B will not utilize further encryption (e.g., an encryption circuit of NIC circuit/RDMA engine of the first host 700A will not utilize encryption) (e.g., set NO_ENCRYPT on HOST1 and HOST2's migration buffers), RDMA the (e.g., data encrypted by the key from HOST2 and in the) buffer to the new host. In certain embodiments, because NO_ENCRYPT is used, no further encryption operation will be performed on the data, but because the data in memory is already encrypted, the data will stay encrypted in transfer. In certain embodiments, second host 700B (e.g., memory controller circuit 716B) will store the transferred data into the memory 120B of the second host 700B, e.g., where it can be decrypted by that key provided by the second host 700B and execution of the VM can resume. In certain embodiments, this allows for control over the offset, and thus a layout for the destination memory that allows for any fragmentation.

In certain embodiments, after the VM data and code is transferred, HOST2 sets a single KeyID with a base address offset of '0' for the VM to use, e.g., to allow the VM to continue operating on the new host with the encrypted memory.

In certain embodiments, the address independent encryption mode and software supplied offset based encryption mode are enumerated using IA32_TME_CAPABILITY MSR and activated using IA32_TME_ACTIVATE MSR. Example formats of these two MSRs are discussed below in reference to Figures 8-9.

**Figure 8** illustrates an example format 800 for a model (e.g., machine) specific register indicating the capabilities of an encryption circuit according to embodiments of the disclosure. For example, with (e.g., single bit) field 802, when set (e.g., to 1 instead of zero), indicating the (e.g., TME) encryption circuit supports address independent encryption mode. For example, with (e.g., single bit) field 804, when set (e.g., to 1 instead of zero), indicating the (e.g., TME) encryption circuit supports software supplied offset based encryption mode.

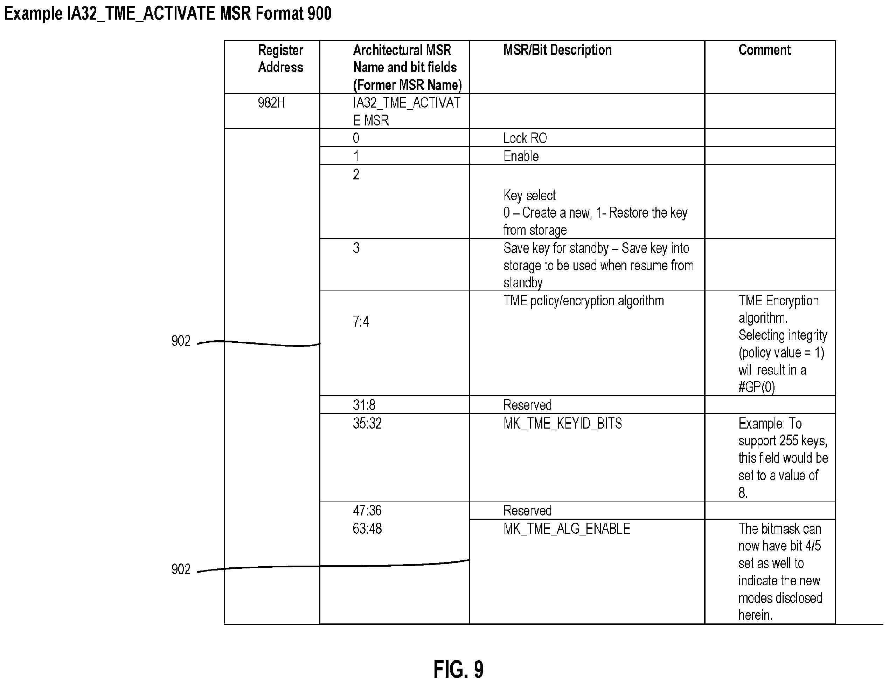

**Figure 9** illustrates an example format 900 for a model (e.g., machine) specific register to control the functionality of an encryption circuit according to embodiments of the disclosure. For example, with (e.g., eight bit) field 902, when set (e.g., to a certain value), causing the (e.g., TME) encryption circuit to use a particular TME policy/encryption algorithm, e.g., as discussed herein for address independent encryption mode and/or software supplied offset based encryption mode. For example, with (e.g., sixteen bit) field 804, when set (e.g., to a certain value), putting the (e.g., TME) encryption circuit into an address independent encryption mode or a software supplied offset based encryption mode.

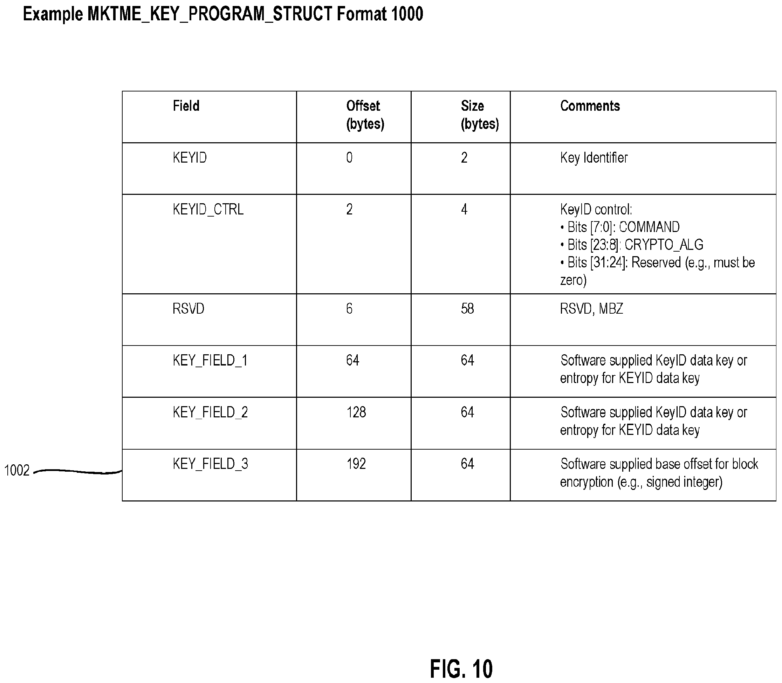

In certain embodiments, the new mode(s) is (are) enabled by software using a PCONFIG instruction. In one embodiment, a PCONFIG instruction takes as input: KeyID information along with the mode to be used with a KeyID in a memory structure, e.g., MKTME_KEY_PROGRAM STRUCT. For software supplied offset mode, in addition to setting the mode appropriately, the offset is to be provided to the MKTME engine in certain embodiments. With the offset provided, and the mode set to software supplied mode, MKTME engine will use the software supplied offset as tweak combined with the PA (e.g., or instead of the PA) of the incoming request in certain embodiments. A MKTME_KEY_PROGRAM_STRUCT to support software supplied offset mode is shown in Figure 10.

**Figure 10** illustrates an example format 1000 for a data structure used by software to manage a key associated with a key identification (e.g., KeyID) value for an encryption circuit according to embodiments of the disclosure. For example, with key field 1002 added to store a value that indicates the software supplied base offset for (e.g., block) encryption, e.g., in signed integer format. In certain embodiments, a MKTME encryption engine stores this third key field 1002 along with the other key material, for example, so that during encryption/decryption, this extra key field would be added to the HPA offset, allowing keys to simulate any offset regardless of their real offset in memory.

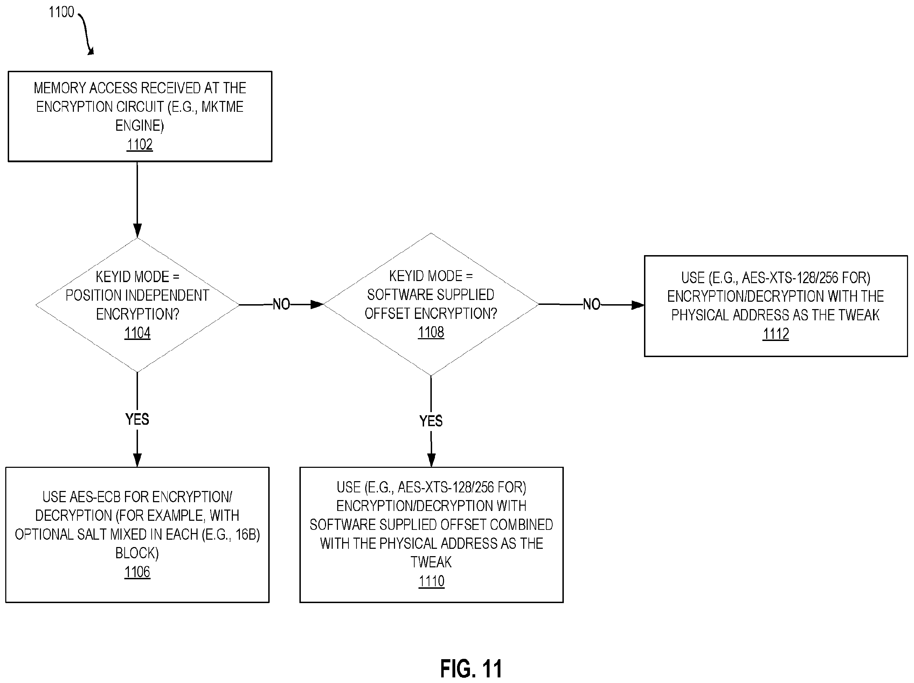

**Figure 11** is a block flow diagram illustrating operations 1100 of a method of processing a memory request with an encryption circuit according to embodiments of the disclosure. The operations 1100 include, at block 1102, receiving a memory access at the encryption circuit (e.g., of a socket at not a NIC). The operations 1100 further include, at block 1104, checking if the KeyID mode indicates a position independent encryption, and if yes, using a position independent encryption at 1106 (e.g., AES-ECB), and if no, checking, at block 1108, if the KeyID mode indicates a software supplied offset encryption, and if yes, using an encryption with a software supplied offset combined with (e.g., added to) the physical address as a tweak at 1110, and if no, using an encryption with the physical address as a tweak at 1112.

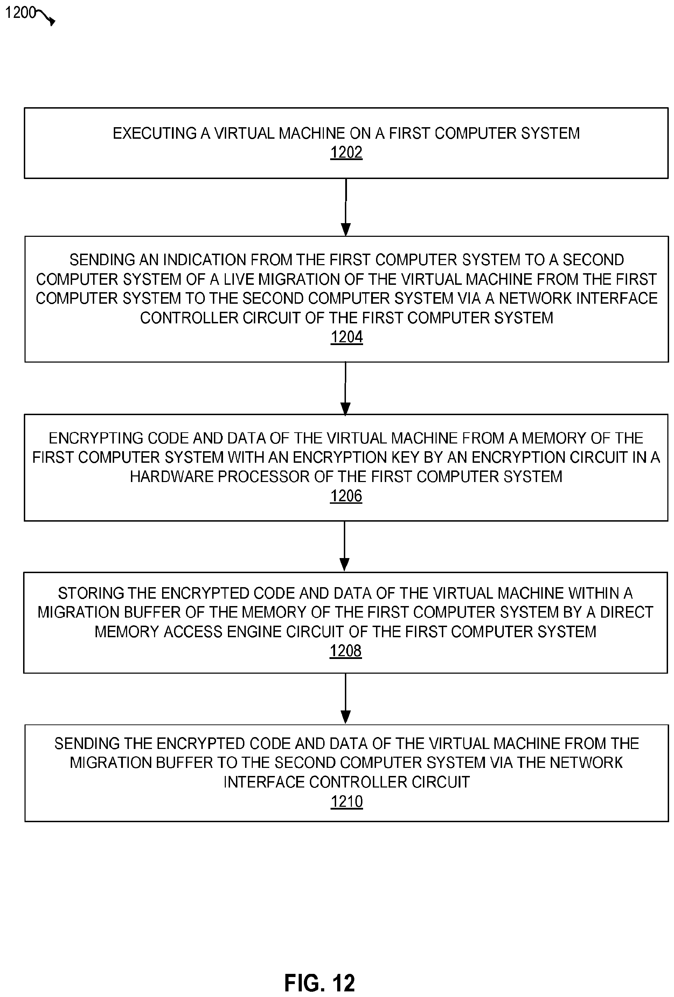

**Figure 12** is a block flow diagram illustrating operations 1200 of a method of live migrating a virtual machine from a first computer system to a second computer system via a network according to embodiments of the disclosure. Some or all of the operations 1200 (or other processes described herein, or variations, and/or combinations thereof) are performed under the control of an encryption circuit.
The operations 1200 include, at block 1202, executing a virtual machine on a first computer system. The operations 1200 further include, at block 1204, sending an indication from the first computer system to a second computer system of a live migration of the virtual machine from the first computer system to the second computer system via a network interface controller circuit of the first computer system. The operations 1200 further include, at block 1206, encrypting code and data of the virtual machine from a memory of the first computer system with an encryption key by an encryption circuit in a hardware processor of the first computer system. The operations 1200 further include, at block 1208, storing the encrypted code and data of the virtual machine within a migration buffer of the memory of the first computer system by a direct memory access engine circuit of the first computer system. The operations 1200 further include, at block 1210, sending the encrypted code and data of the virtual machine from the migration buffer to the second computer system via the network interface controller circuit.

Exemplary architectures, systems, etc. that the above may be used in are detailed below. Exemplary instruction formats that may cause a configuration, a decryption, an encryption, a read (e.g., and a decryption), and/or a write (e.g., and an encryption) are detailed below.

In yet another embodiment, an apparatus comprises a data storage device that stores code that when executed by a hardware processor causes the hardware processor to perform any method disclosed herein. An apparatus may be as described in the detailed description. A method may be as described in the detailed description.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel^{®} 64 and IA-32 Architectures Software Developer's Manual, November 2018; and see Intel^{®} Architecture Instruction Set Extensions Programming Reference, October 2018).

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

### Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

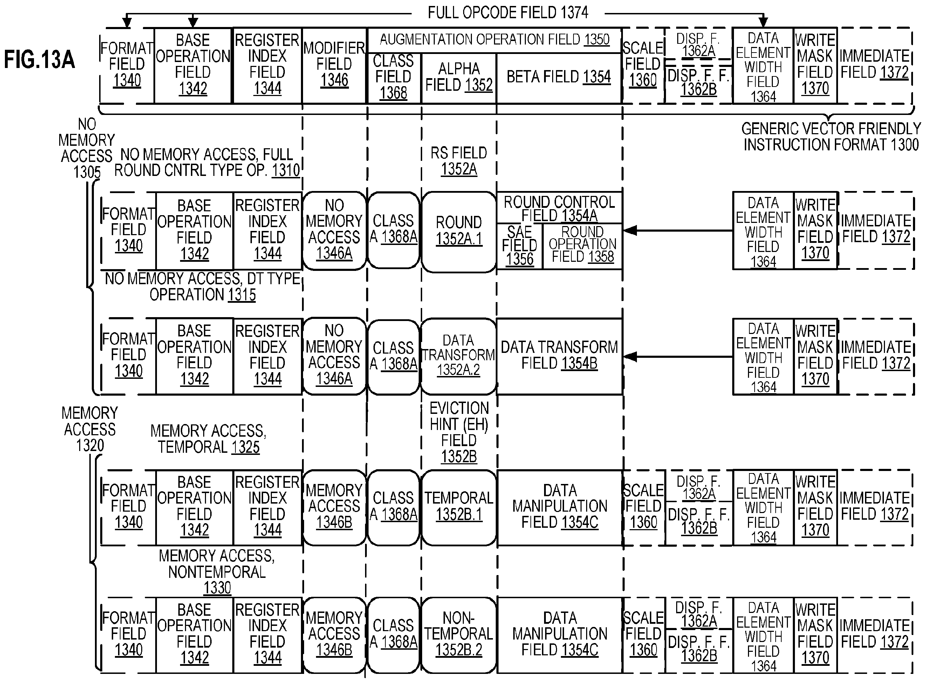

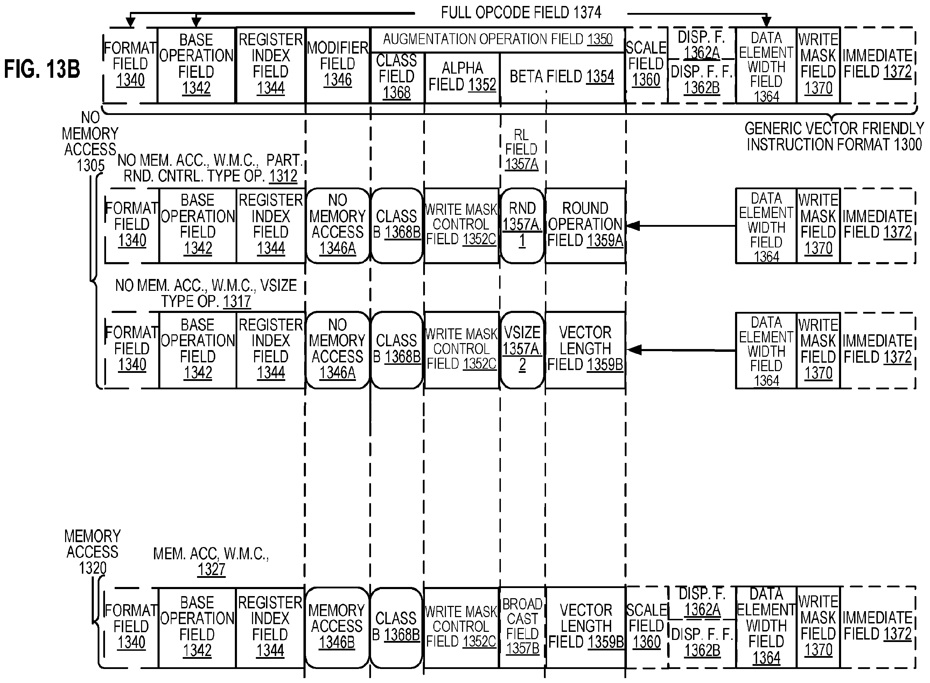

**Figures 13A-13B** are block diagrams illustrating a generic vector friendly instruction format and instruction templates thereof according to embodiments of the disclosure. **Figure 13A** is a block diagram illustrating a generic vector friendly instruction format and class A instruction templates thereof according to embodiments of the disclosure; while **Figure 13B** is a block diagram illustrating the generic vector friendly instruction format and class B instruction templates thereof according to embodiments of the disclosure. Specifically, a generic vector friendly instruction format 1300 for which are defined class A and class B instruction templates, both of which include no memory access 1305 instruction templates and memory access 1320 instruction templates. The term generic in the context of the vector friendly instruction format refers to the instruction format not being tied to any specific instruction set.

While embodiments of the disclosure will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 13A** include: 1) within the no memory access 1305 instruction templates there is shown a no memory access, full round control type operation 1310 instruction template and a no memory access, data transform type operation 1315 instruction template; and 2) within the memory access 1320 instruction templates there is shown a memory access, temporal 1325 instruction template and a memory access, non-temporal 1330 instruction template. The class B instruction templates in **Figure 13B** include: 1) within the no memory access 1305 instruction templates there is shown a no memory access, write mask control, partial round control type operation 1312 instruction template and a no memory access, write mask control, vsize type operation 1317 instruction template; and 2) within the memory access 1320 instruction templates there is shown a memory access, write mask control 1327 instruction template.

The generic vector friendly instruction format 1300 includes the following fields listed below in the order illustrated in **Figures 13A-13B****.**

Format field 1340 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 1342 - its content distinguishes different base operations.

Register index field 1344 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 1346 - its content distinguishes occurrences of instructions in the generic vector instruction format that specify memory access from those that do not; that is, between no memory access 1305 instruction templates and memory access 1320 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1350 - its content distinguishes which one of a variety of different operations to be performed in addition to the base operation. This field is context specific. In one embodiment of the disclosure, this field is divided into a class field 1368, an alpha field 1352, and a beta field 1354. The augmentation operation field 1350 allows common groups of operations to be performed in a single instruction rather than 2, 3, or 4 instructions.

Scale field 1360 - its content allows for the scaling of the index field's content for memory address generation (e.g., for address generation that uses 2^{scale} * index + base).

Displacement Field 1362A- its content is used as part of memory address generation (e.g., for address generation that uses 2^{scale} * index + base + displacement).

Displacement Factor Field 1362B (note that the juxtaposition of displacement field 1362A directly over displacement factor field 1362B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1374 (described later herein) and the data manipulation field 1354C. The displacement field 1362A and the displacement factor field 1362B are optional in the sense that they are not used for the no memory access 1305 instruction templates and/or different embodiments may implement only one or none of the two.

Data element width field 1364 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1370 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1370 allows for partial vector operations, including loads, stores, arithmetic, logical, etc. While embodiments of the disclosure are described in which the write mask field's 1370 content selects one of a number of write mask registers that contains the write mask to be used (and thus the write mask field's 1370 content indirectly identifies that masking to be performed), alternative embodiments instead or additional allow the mask write field's 1370 content to directly specify the masking to be performed.

Immediate field 1372 - its content allows for the specification of an immediate. This field is optional in the sense that is it not present in an implementation of the generic vector friendly format that does not support immediate and it is not present in instructions that do not use an immediate.

Class field 1368 - its content distinguishes between different classes of instructions. With reference to **Figures 13A-B**, the contents of this field select between class A and class B instructions. In **Figures 13A-B,**rounded corner squares are used to indicate a specific value is present in a field (e.g., class A 1368A and class B 1368B for the class field 1368 respectively in **Figures 13A-B**)**.**

### Instruction Templates of Class A

In the case of the non-memory access 1305 instruction templates of class A, the alpha field 1352 is interpreted as an RS field 1352A, whose content distinguishes which one of the different augmentation operation types are to be performed (e.g., round 1352A.1 and data transform 13 52A.2 are respectively specified for the no memory access, round type operation 1310 and the no memory access, data transform type operation 1315 instruction templates), while the beta field 1354 distinguishes which of the operations of the specified type is to be performed. In the no memory access 1305 instruction templates, the scale field 1360, the displacement field 1362A, and the displacement scale filed 1362B are not present.

### No-Memory Access Instruction Templates - Full Round Control Type Operation

In the no memory access full round control type operation 1310 instruction template, the beta field 1354 is interpreted as a round control field 1354A, whose content(s) provide static rounding. While in the described embodiments of the disclosure the round control field 1354A includes a suppress all floating point exceptions (SAE) field 1356 and a round operation control field 1358, alternative embodiments may support may encode both these concepts into the same field or only have one or the other of these concepts/fields (e.g., may have only the round operation control field 1358).

SAE field 1356 - its content distinguishes whether or not to disable the exception event reporting; when the SAE field's 1356 content indicates suppression is enabled, a given instruction does not report any kind of floating-point exception flag and does not raise any floating-point exception handler.

Round operation control field 1358 - its content distinguishes which one of a group of rounding operations to perform (e.g., Round-up, Round-down, Round-towards-zero and Round-to-nearest). Thus, the round operation control field 1358 allows for the changing of the rounding mode on a per instruction basis. In one embodiment of the disclosure where a processor includes a control register for specifying rounding modes, the round operation control field's 1350 content overrides that register value.

### No Memory Access Instruction Templates - Data Transform Type Operation

In the no memory access data transform type operation 1315 instruction template, the beta field 1354 is interpreted as a data transform field 1354B, whose content distinguishes which one of a number of data transforms is to be performed (e.g., no data transform, swizzle, broadcast).

In the case of a memory access 1320 instruction template of class A, the alpha field 1352 is interpreted as an eviction hint field 1352B, whose content distinguishes which one of the eviction hints is to be used (in **Figure 13A****,** temporal 1352B.1 and non-temporal 1352B.2 are respectively specified for the memory access, temporal 1325 instruction template and the memory access, non-temporal 1330 instruction template), while the beta field 1354 is interpreted as a data manipulation field 1354C, whose content distinguishes which one of a number of data manipulation operations (also known as primitives) is to be performed (e.g., no manipulation; broadcast; up conversion of a source; and down conversion of a destination). The memory access 1320 instruction templates include the scale field 1360, and optionally the displacement field 1362A or the displacement scale field 1362B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 1352 is interpreted as a write mask control (Z) field 1352C, whose content distinguishes whether the write masking controlled by the write mask field 1370 should be a merging or a zeroing.

In the case of the non-memory access 1305 instruction templates of class B, part of the beta field 1354 is interpreted as an RL field 1357A, whose content distinguishes which one of the different augmentation operation types are to be performed (e.g., round 1357A.1 and vector length (VSIZE) 1357A.2 are respectively specified for the no memory access, write mask control, partial round control type operation 1312 instruction template and the no memory access, write mask control, VSIZE type operation 1317 instruction template), while the rest of the beta field 1354 distinguishes which of the operations of the specified type is to be performed. In the no memory access 1305 instruction templates, the scale field 1360, the displacement field 1362A, and the displacement scale filed 1362B are not present.

In the no memory access, write mask control, partial round control type operation 1310 instruction template, the rest of the beta field 1354 is interpreted as a round operation field 1359A and exception event reporting is disabled (a given instruction does not report any kind of floating-point exception flag and does not raise any floating-point exception handler).

Round operation control field 1359A - just as round operation control field 1358, its content distinguishes which one of a group of rounding operations to perform (e.g., Round-up, Round-down, Round-towards-zero and Round-to-nearest). Thus, the round operation control field 1359A allows for the changing of the rounding mode on a per instruction basis. In one embodiment of the disclosure where a processor includes a control register for specifying rounding modes, the round operation control field's 1350 content overrides that register value.

In the no memory access, write mask control, VSIZE type operation 1317 instruction template, the rest of the beta field 1354 is interpreted as a vector length field 1359B, whose content distinguishes which one of a number of data vector lengths is to be performed on (e.g., 128, 256, or 512 byte).

In the case of a memory access 1320 instruction template of class B, part of the beta field 1354 is interpreted as a broadcast field 1357B, whose content distinguishes whether or not the broadcast type data manipulation operation is to be performed, while the rest of the beta field 1354 is interpreted the vector length field 1359B. The memory access 1320 instruction templates include the scale field 1360, and optionally the displacement field 1362A or the displacement scale field 1362B.

With regard to the generic vector friendly instruction format 1300, a full opcode field 1374 is shown including the format field 1340, the base operation field 1342, and the data element width field 1364. While one embodiment is shown where the full opcode field 1374 includes all of these fields, the full opcode field 1374 includes less than all of these fields in embodiments that do not support all of them. The full opcode field 1374 provides the operation code (opcode).

The augmentation operation field 1350, the data element width field 1364, and the write mask field 1370 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the disclosure, different processors or different cores within a processor may support only class A, only class B, or both classes. For instance, a high-performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the disclosure). Also, a single processor may include multiple cores, all of which support the same class or in which different cores support different class. For instance, in a processor with separate graphics and general-purpose cores, one of the graphics cores intended primarily for graphics and/or scientific computing may support only class A, while one or more of the general-purpose cores may be high-performance general-purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the disclosure. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

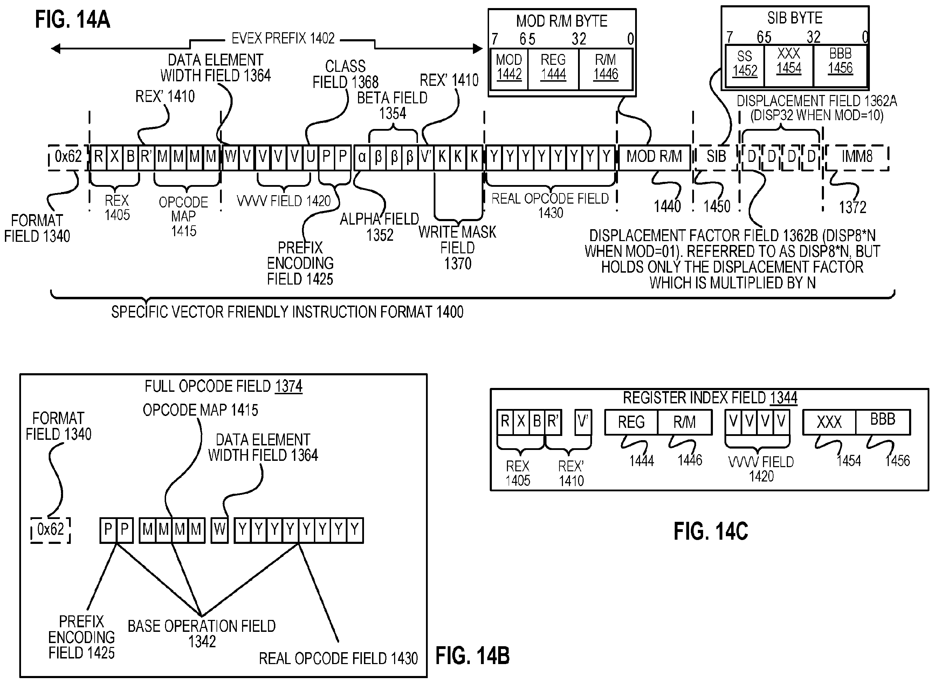

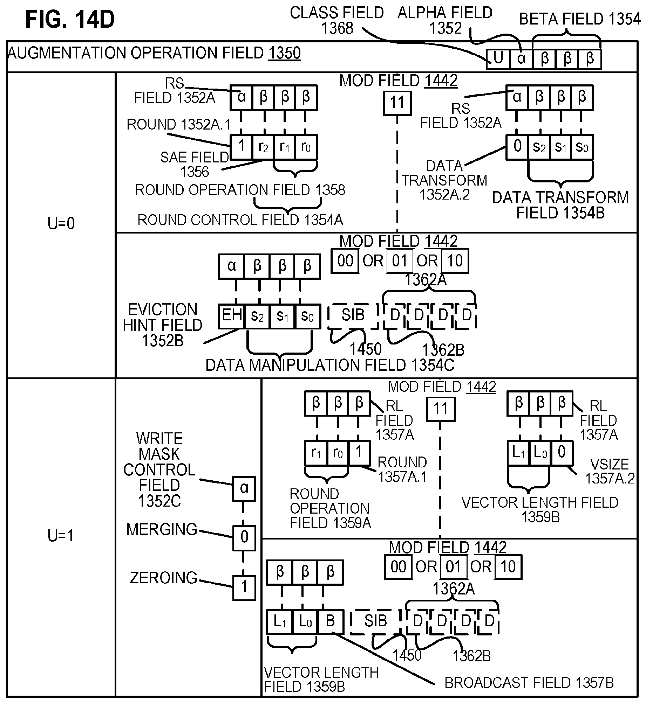

**Figure 14** is a block diagram illustrating an exemplary specific vector friendly instruction format according to embodiments of the disclosure. **Figure 14** shows a specific vector friendly instruction format 1400 that is specific in the sense that it specifies the location, size, interpretation, and order of the fields, as well as values for some of those fields. The specific vector friendly instruction format 1400 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 13** into which the fields from **Figure 14** map are illustrated.

It should be understood that, although embodiments of the disclosure are described with reference to the specific vector friendly instruction format 1400 in the context of the generic vector friendly instruction format 1300 for illustrative purposes, the disclosure is not limited to the specific vector friendly instruction format 1400 except where claimed. For example, the generic vector friendly instruction format 1300 contemplates a variety of possible sizes for the various fields, while the specific vector friendly instruction format 1400 is shown as having fields of specific sizes. By way of specific example, while the data element width field 1364 is illustrated as a one-bit field in the specific vector friendly instruction format 1400, the disclosure is not so limited (that is, the generic vector friendly instruction format 1300 contemplates other sizes of the data element width field 1364).

The generic vector friendly instruction format 1300 includes the following fields listed below in the order illustrated in **Figure 14A****.**

EVEX Prefix (Bytes 0-3) 1402 - is encoded in a four-byte form.

Format Field 1340 (EVEX Byte 0, bits [7:0]) - the first byte (EVEX Byte 0) is the format field 1340 and it contains 0x62 (the unique value used for distinguishing the vector friendly instruction format in one embodiment of the disclosure).

The second-fourth bytes (EVEX Bytes 1-3) include a number of bit fields providing specific capability.

REX field 1405 (EVEX Byte 1, bits [7-5]) - consists of a EVEX.R bit field (EVEX Byte 1, bit [7] - R), EVEX.X bit field (EVEX byte 1, bit [6] - X), and 1357BEX byte 1, bit[5] - B). The EVEX.R, EVEX.X, and EVEX.B bit fields provide the same functionality as the corresponding VEX bit fields, and are encoded using 1s complement form, i.e., ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 1310 - this is the first part of the REX' field 1310 and is the EVEX.R' bit field (EVEX Byte 1, bit [4] - R') that is used to encode either the upper 16 or lower 16 of the extended 32 register set. In one embodiment of the disclosure, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the disclosure do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 1415 (EVEX byte 1, bits [3:0] - mmmm) - its content encodes an implied leading opcode byte (0F, 0F 38, or 0F 3).

Data element width field 1364 (EVEX byte 2, bit [7] - W) - is represented by the notation EVEX.W. EVEX.W is used to define the granularity (size) of the datatype (either 32-bit data elements or 64-bit data elements).

FVFX.vvvv 1420 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 1420 encodes the 4 low-order bits of the first source register specifier stored in inverted (1s complement) form. Depending on the instruction, an extra different EVEX bit field is used to extend the specifier size to 32 registers.

EVEX.U 1368 Class field (EVEX byte 2, bit [2]-U) - If EVEX.U = 0, it indicates class A or EVEX.U0; if EVEX.U = 1, it indicates class B or EVEX.U1.

Prefix encoding field 1425 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 1352 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 1354 (EVEX byte 3, bits [6:4]-SSS, also known as EVEX.s₂₋₀, EVEX.r₂₋₀, EVEX.rr1, FVEX.LL0, EVEX.LLB; also illustrated with βββ) - as previously described, this field is context specific.

REX' field 1310 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 1370 (EVEX byte 3, bits [2:0]-kkk) - its content specifies the index of a register in the write mask registers as previously described. In one embodiment of the disclosure, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 1430 (Byte 4) is also known as the opcode byte. Part of the opcode is specified in this field.

MOD R/M Field 1440 (Byte 5) includes MOD field 1442, Reg field 1444, and R/M field 1446. As previously described, the MOD field's 1442 content distinguishes between memory access and non-memory access operations. The role of Reg field 1444 can be summarized to two situations: encoding either the destination register operand or a source register operand, or be treated as an opcode extension and not used to encode any instruction operand. The role of R/M field 1446 may include the following: encoding the instruction operand that references a memory address, or encoding either the destination register operand or a source register operand.

Scale, Index, Base (SIB) Byte (Byte 6) - As previously described, the scale field's 1350 content is used for memory address generation. SIB.xxx 1454 and SIB.bbb 1456 - the contents of these fields have been previously referred to with regard to the register indexes Xxxx and Bbbb.

Displacement field 1362A (Bytes 7-10) - when MOD field 1442 contains 10, bytes 7-10 are the displacement field 1362A, and it works the same as the legacy 32-bit displacement (disp32) and works at byte granularity.

Displacement factor field 1362B (Byte 7) - when MOD field 1442 contains 01, byte 7 is the displacement factor field 1362B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 1362B is a reinterpretation of disp8; when using displacement factor field 1362B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 1362B substitutes the legacy x86 instruction set 8-bit displacement. Thus, the displacement factor field 1362B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 1372 operates as previously described.

### Full Opcode Field

**Figure 14B** is a block diagram illustrating the fields of the specific vector friendly instruction format 1400 that make up the full opcode field 1374 according to one embodiment of the disclosure. Specifically, the full opcode field 1374 includes the format field 1340, the base operation field 1342, and the data element width (W) field 1364. The base operation field 1342 includes the prefix encoding field 1425, the opcode map field 1415, and the real opcode field 1430.

### Register Index Field

**Figure 14C** is a block diagram illustrating the fields of the specific vector friendly instruction format 1400 that make up the register index field 1344 according to one embodiment of the disclosure. Specifically, the register index field 1344 includes the REX field 1405, the REX' field 1410, the MODR/M.reg field 1444, the MODR/M.r/m field 1446, the VVVV field 1420, xxx field 1454, and the bbb field 1456.

### Augmentation Operation Field

**Figure 14D** is a block diagram illustrating the fields of the specific vector friendly instruction format 1400 that make up the augmentation operation field 1350 according to one embodiment of the disclosure. When the class (U) field 1368 contains 0, it signifies EVEX.U0 (class A 1368A); when it contains 1, it signifies EVEX.U1 (class B 1368B). When U=0 and the MOD field 1442 contains 11 (signifying a no memory access operation), the alpha field 1352 (EVEX byte 3, bit [7] - EH) is interpreted as the rs field 1352A. When the rs field 1352A contains a 1 (round 1352A.1), the beta field 1354 (EVEX byte 3, bits [6:4]- SSS) is interpreted as the round control field 1354A. The round control field 1354A includes a one bit SAE field 1356 and a two bit round operation field 1358. When the rs field 1352A contains a 0 (data transform 1352A.2), the beta field 1354 (EVEX byte 3, bits [6:4]- SSS) is interpreted as a three bit data transform field 1354B. When U=0 and the MOD field 1442 contains 00, 01, or 10 (signifying a memory access operation), the alpha field 1352 (EVEX byte 3, bit [7] - EH) is interpreted as the eviction hint (EH) field 1352B and the beta field 1354 (EVEX byte 3, bits [6:4]- SSS) is interpreted as a three bit data manipulation field 1354C.

When U=1, the alpha field 1352 (EVEX byte 3, bit [7] - EH) is interpreted as the write mask control (Z) field 1352C. When U=1 and the MOD field 1442 contains 11 (signifying a no memory access operation), part of the beta field 1354 (EVEX byte 3, bit [4]- S₀) is interpreted as the RL field 1357A; when it contains a 1 (round 1357A.1) the rest of the beta field 1354 (EVEX byte 3, bit [6-5]- S₂₋₁) is interpreted as the round operation field 1359A, while when the RL field 1357A contains a 0 (VSIZE 1357.A2) the rest of the beta field 1354 (EVEX byte 3, bit [6-5]- S₂₋₁) is interpreted as the vector length field 1359B (EVEX byte 3, bit [6-5]- L₁₋₀). When U=1 and the MOD field 1442 contains 00, 01, or 10 (signifying a memory access operation), the beta field 1354 (EVEX byte 3, bits [6:4]- SSS) is interpreted as the vector length field 1359B (EVEX byte 3, bit [6-5]- L₁₋₀) and the broadcast field 1357B (EVEX byte 3, bit [4]-B).

### Exemplary Register Architecture

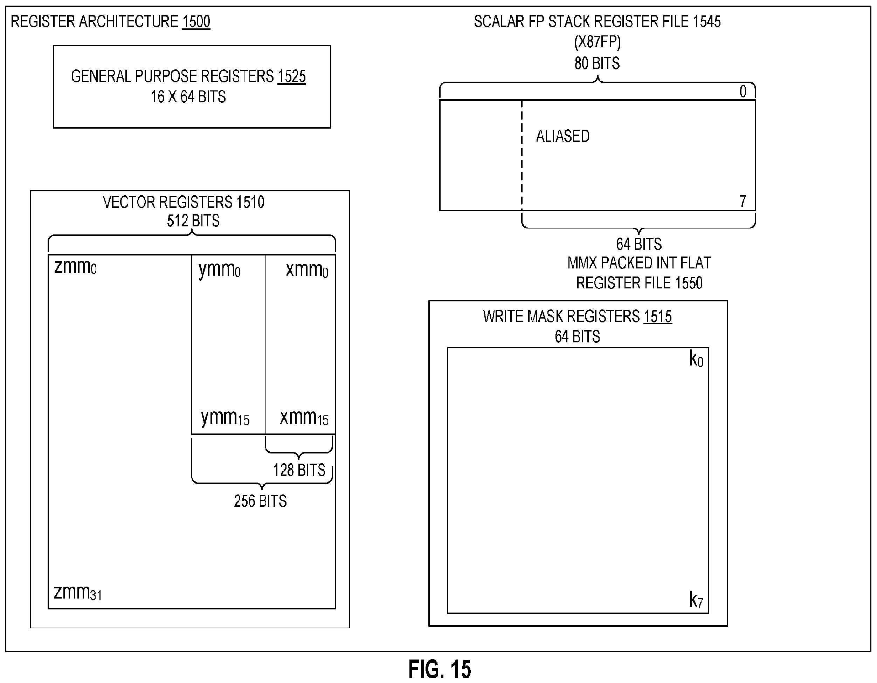

**Figure 15** is a block diagram of a register architecture 1500 according to one embodiment of the disclosure. In the embodiment illustrated, there are 32 vector registers 1510 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 1400 operates on these overlaid register file as illustrated in the below tables.

| Adjustable Vector Length | Class | Operations | Registers |
|---|---|---|---|
| Instruction Templates that do not include the | A (Figure 13A; U=0) | 1310, 1315, 1325, 1330 | zmm registers (the vector length is 64 byte) |
| vector length field 1359B | B (Figure 13B; U=1) | 1312 | zmm registers (the vector length is 64 byte) |
| Instruction templates that do include the vector length field 1359B | B (Figure 13B; U=1) | 1317, 1327 | zmm, ymm, or xmm registers (the vector length is 64 byte, 32 byte, or 16 byte) depending on the vector length field 1359B |

In other words, the vector length field 1359B selects between a maximum length and one or more other shorter lengths, where each such shorter length is half the length of the preceding length; and instructions templates without the vector length field 1359B operate on the maximum vector length. Further, in one embodiment, the class B instruction templates of the specific vector friendly instruction format 1400 operate on packed or scalar single/double-precision floating point data and packed or scalar integer data. Scalar operations are operations performed on the lowest order data element position in a zmm/ymm/xmm register; the higher order data element positions are either left the same as they were prior to the instruction or zeroed depending on the embodiment.

Write mask registers 1515 - in the embodiment illustrated, there are 8 write mask registers (k0 through k7), each 64 bits in size. In an alternate embodiment, the write mask registers 1515 are 16 bits in size. As previously described, in one embodiment of the disclosure, the vector mask register k0 cannot be used as a write mask; when the encoding that would normally indicate k0 is used for a write mask, it selects a hardwired write mask of 0xFFFF, effectively disabling write masking for that instruction.

General-purpose registers 1525 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1545, on which is aliased the MMX packed integer flat register file 1550 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the disclosure may use wider or narrower registers. Additionally, alternative embodiments of the disclosure may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

**Figure 16A** is a block diagram illustrating both an exemplary in-order pipeline and an exemplary register renaming, out-of-order issue/execution pipeline according to embodiments of the disclosure. Figure 16B is a block diagram illustrating both an exemplary embodiment of an in-order architecture core and an exemplary register renaming, out-of-order issue/execution architecture core to be included in a processor according to embodiments of the disclosure. The solid lined boxes in **Figures 16A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 16A****,** a processor pipeline 1600 includes a fetch stage 1602, a length decode stage 1604, a decode stage 1606, an allocation stage 1608, a renaming stage 1610, a scheduling (also known as a dispatch or issue) stage 1612, a register read/memory read stage 1614, an execute stage 1616, a write back/memory write stage 1618, an exception handling stage 1622, and a commit stage 1624.

**Figure 16B** shows processor core 1690 including a front-end unit 1630 coupled to an execution engine unit 1650, and both are coupled to a memory unit 1670. The core 1690 may be a reduced instruction set computing (RISC) core, a complex instruction set computing (CISC) core, a very long instruction word (VLIW) core, or a hybrid or alternative core type. As yet another option, the core 1690 may be a special-purpose core, such as, for example, a network or communication core, compression engine, coprocessor core, general purpose computing graphics processing unit (GPGPU) core, graphics core, or the like.

The front-end unit 1630 includes a branch prediction unit 1632 coupled to an instruction cache unit 1634, which is coupled to an instruction translation lookaside buffer (TLB) 1636, which is coupled to an instruction fetch unit 1638, which is coupled to a decode unit 1640. The decode unit 1640 (or decoder or decoder unit) may decode instructions (e.g., macro-instructions), and generate as an output one or more micro-operations, micro-code entry points, micro-instructions, other instructions, or other control signals, which are decoded from, or which otherwise reflect, or are derived from, the original instructions. The decode unit 1640 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1690 includes a microcode ROM or other medium that stores microcode for certain macro-instructions (e.g., in decode unit 1640 or otherwise within the front-end unit 1630). The decode unit 1640 is coupled to a rename/allocator unit 1652 in the execution engine unit 1650.

The execution engine unit 1650 includes the rename/allocator unit 1652 coupled to a retirement unit 1654 and a set of one or more scheduler unit(s) 1656. The scheduler unit(s) 1656 represents any number of different schedulers, including reservations stations, central instruction window, etc. The scheduler unit(s) 1656 is coupled to the physical register file(s) unit(s) 1658. Each of the physical register file(s) units 1658 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 1658 comprises a vector registers unit, a write mask registers unit, and a scalar registers unit. These register units may provide architectural vector registers, vector mask registers, and general-purpose registers. The physical register file(s) unit(s) 1658 is overlapped by the retirement unit 1654 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1654 and the physical register file(s) unit(s) 1658 are coupled to the execution cluster(s) 1660. The execution cluster(s) 1660 includes a set of one or more execution units 1662 and a set of one or more memory access units 1664. The execution units 1662 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1656, physical register file(s) unit(s) 1658, and execution cluster(s) 1660 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1664). It should also be understood that where separate pipelines are used, one or more of these pipelines may be out-of-order issue/execution and the rest in-order.

The set of memory access units 1664 is coupled to the memory unit 1670, which includes a data TLB unit 1672 coupled to a data cache unit 1674 coupled to a level 2 (L2) cache unit 1676. In one exemplary embodiment, the memory access units 1664 may include a load unit, a store address unit, and a store data unit, each of which is coupled to the data TLB unit 1672 in the memory unit 1670. The instruction cache unit 1634 is further coupled to a level 2 (L2) cache unit 1676 in the memory unit 1670. The L2 cache unit 1676 is coupled to one or more other levels of cache and eventually to a main memory.

In certain embodiments, a prefetch circuit 1678 is included to prefetch data, for example, to predict access addresses and bring the data for those addresses into a cache or caches (e.g., from memory 1680).

By way of example, the exemplary register renaming, out-of-order issue/execution core architecture may implement the pipeline 1600 as follows: 1) the instruction fetch 1638 performs the fetch and length decoding stages 1602 and 1604; 2) the decode unit 1640 performs the decode stage 1606; 3) the rename/allocator unit 1652 performs the allocation stage 1608 and renaming stage 1610; 4) the scheduler unit(s) 1656 performs the schedule stage 1612; 5) the physical register file(s) unit(s) 1658 and the memory unit 1670 perform the register read/memory read stage 1614; the execution cluster 1660 perform the execute stage 1616; 6) the memory unit 1670 and the physical register file(s) unit(s) 1658 perform the write back/memory write stage 1618; 7) various units may be involved in the exception handling stage 1622; and 8) the retirement unit 1654 and the physical register file(s) unit(s) 1658 perform the commit stage 1624.

The core 1690 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1690 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyper-Threading technology).

While register renaming is described in the context of out-of-order execution, it should be understood that register renaming may be used in an in-order architecture. While the illustrated embodiment of the processor also includes separate instruction and data cache units 1634/1674 and a shared L2 cache unit 1676, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

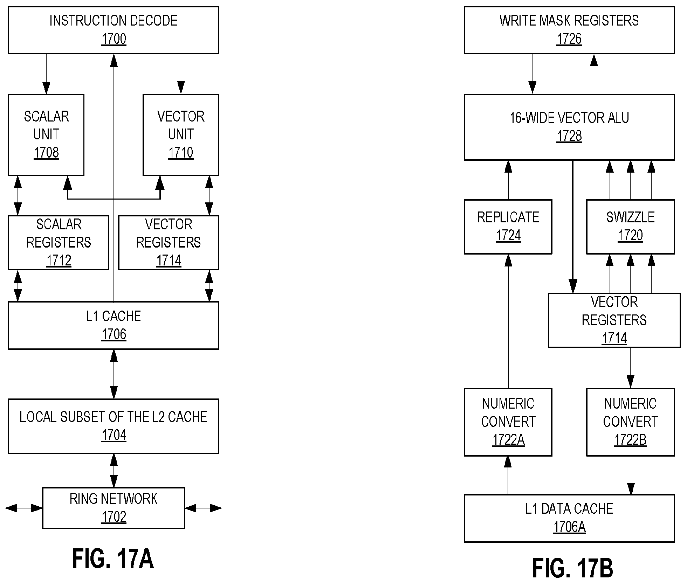

**Figures 17A-B**illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 17A** is a block diagram of a single processor core, along with its connection to the on-die interconnect network 1702 and with its local subset of the Level 2 (L2) cache 1704, according to embodiments of the disclosure. In one embodiment, an instruction decode unit 1700 supports the x86 instruction set with a packed data instruction set extension. An L1 cache 1706 allows low-latency accesses to cache memory into the scalar and vector units. While in one embodiment (to simplify the design), a scalar unit 1708 and a vector unit 1710 use separate register sets (respectively, scalar registers 1712 and vector registers 1714) and data transferred between them is written to memory and then read back in from a level 1 (L1) cache 1706, alternative embodiments of the disclosure may use a different approach (e.g., use a single register set or include a communication path that allow data to be transferred between the two register files without being written and read back).

The local subset of the L2 cache 1704 is part of a global L2 cache that is divided into separate local subsets, one per processor core. Each processor core has a direct access path to its own local subset of the L2 cache 1704. Data read by a processor core is stored in its L2 cache subset 1704 and can be accessed quickly, in parallel with other processor cores accessing their own local L2 cache subsets. Data written by a processor core is stored in its own L2 cache subset 1704 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 17B** is an expanded view of part of the processor core in **Figure 17A** according to embodiments of the disclosure. **Figure 17B** includes an L1 data cache 1706A part of the L1 cache 1704, as well as more detail regarding the vector unit 1710 and the vector registers 1714. Specifically, the vector unit 1710 is a 16-wide vector processing unit (VPU) (see the 16-wide ALU 1728), which executes one or more of integer, single-precision float, and double-precision float instructions. The VPU supports swizzling the register inputs with swizzle unit 1720, numeric conversion with numeric convert units 1722A-B, and replication with replication unit 1724 on the memory input. Write mask registers 1726 allow predicating resulting vector writes.

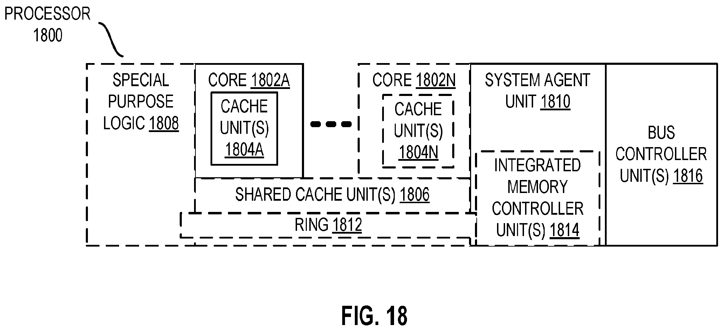

**Figure 18** is a block diagram of a processor 1800 that may have more than one core, may have an integrated memory controller, and may have integrated graphics according to embodiments of the disclosure. The solid lined boxes in **Figure 18** illustrate a processor 1800 with a single core 1802A, a system agent 1810, a set of one or more bus controller units 1816, while the optional addition of the dashed lined boxes illustrates an alternative processor 1800 with multiple cores 1802A-N, a set of one or more integrated memory controller unit(s) 1814 in the system agent unit 1810, and special purpose logic 1808.

Thus, different implementations of the processor 1800 may include: 1) a CPU with the special purpose logic 1808 being integrated graphics and/or scientific (throughput) logic (which may include one or more cores), and the cores 1802A-N being one or more general purpose cores (e.g., general purpose in-order cores, general purpose out-of-order cores, a combination of the two); 2) a coprocessor with the cores 1802A-N being a large number of special purpose cores intended primarily for graphics and/or scientific (throughput); and 3) a coprocessor with the cores 1802A-N being a large number of general purpose in-order cores. Thus, the processor 1800 may be a general-purpose processor, coprocessor, or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1800 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1806, and external memory (not shown) coupled to the set of integrated memory controller units 1814. The set of shared cache units 1806 may include one or more mid-level caches, such as level 2 (L2), level 3 (L3), level 4 (L4), or other levels of cache, a last level cache (LLC), and/or combinations thereof. While in one embodiment a ring-based interconnect unit 1812 interconnects the integrated graphics logic 1808, the set of shared cache units 1806, and the system agent unit 1810/integrated memory controller unit(s) 1814, alternative embodiments may use any number of well-known techniques for interconnecting such units. In one embodiment, coherency is maintained between one or more cache units 1806 and cores 1802-A-N.

In some embodiments, one or more of the cores 1802A-N are capable of multithreading. The system agent 1810 includes those components coordinating and operating cores 1802A-N. The system agent unit 1810 may include for example a power control unit (PCU) and a display unit. The PCU may be or include logic and components needed for regulating the power state of the cores 1802A-N and the integrated graphics logic 1808. The display unit is for driving one or more externally connected displays.

The cores 1802A-N may be homogenous or heterogeneous in terms of architecture instruction set; that is, two or more of the cores 1802A-N may be capable of execution the same instruction set, while others may be capable of executing only a subset of that instruction set or a different instruction set.

### Exemplary Computer Architectures

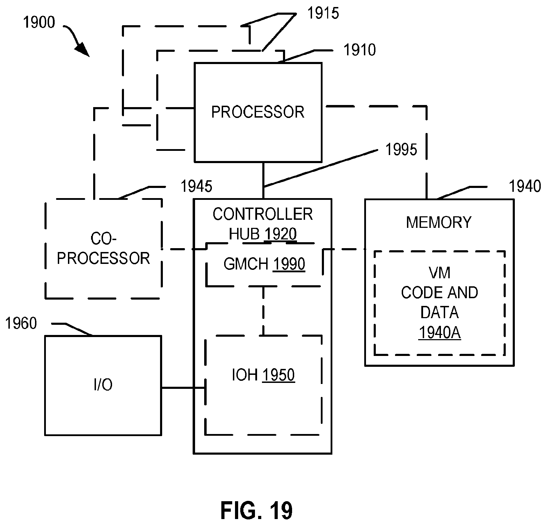

**Figures 19-22** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 19****,** shown is a block diagram of a system 1900 in accordance with one embodiment of the present disclosure. The system 1900 may include one or more processors 1910, 1915, which are coupled to a controller hub 1920. In one embodiment the controller hub 1920 includes a graphics memory controller hub (GMCH) 1990 and an Input/Output Hub (IOH) 1950 (which may be on separate chips); the GMCH 1990 includes memory and graphics controllers to which are coupled memory 1940 and a coprocessor 1945; the IOH 1950 is couples input/output (I/O) devices 1960 to the GMCH 1990. Alternatively, one or both of the memory and graphics controllers are integrated within the processor (as described herein), the memory 1940 and the coprocessor 1945 are coupled directly to the processor 1910, and the controller hub 1920 in a single chip with the IOH 1950. Memory 1940 may include VM code (e.g., and VM data) 1940A, for example, to store code that when executed causes a processor to perform any method of this disclosure.

The optional nature of additional processors 1915 is denoted in **Figure 19** with broken lines. Each processor 1910, 1915 may include one or more of the processing cores described herein and may be some version of the processor 1800.

The memory 1940 may be, for example, dynamic random access memory (DRAM), phase change memory (PCM), or a combination of the two. For at least one embodiment, the controller hub 1920 communicates with the processor(s) 1910, 1915 via a multi-drop bus, such as a frontside bus (FSB), point-to-point interface such as Quickpath Interconnect (QPI), or similar connection 1995.

In one embodiment, the coprocessor 1945 is a special-purpose processor, such as, for example, a high-throughput MIC processor, a network or communication processor, compression engine, graphics processor, GPGPU, embedded processor, or the like. In one embodiment, controller hub 1920 may include an integrated graphics accelerator.

There can be a variety of differences between the physical resources 1910, 1915 in terms of a spectrum of metrics of merit including architectural, microarchitectural, thermal, power consumption characteristics, and the like.

In one embodiment, the processor 1910 executes instructions that control data processing operations of a general type. Embedded within the instructions may be coprocessor instructions. The processor 1910 recognizes these coprocessor instructions as being of a type that should be executed by the attached coprocessor 1945. Accordingly, the processor 1910 issues these coprocessor instructions (or control signals representing coprocessor instructions) on a coprocessor bus or other interconnect, to coprocessor 1945. Coprocessor(s) 1945 accept and execute the received coprocessor instructions.

Referring now to **Figure 20****,** shown is a block diagram of a first more specific exemplary system 2000 in accordance with an embodiment of the present disclosure. As shown in **Figure 20****,** multiprocessor system 2000 is a point-to-point interconnect system, and includes a first processor 2070 and a second processor 2080 coupled via a point-to-point interconnect 2050. Each of processors 2070 and 2080 may be some version of the processor 1800. In one embodiment of the disclosure, processors 2070 and 2080 are respectively processors 1910 and 1915, while coprocessor 2038 is coprocessor 1945. In another embodiment, processors 2070 and 2080 are respectively processor 1910 coprocessor 1945.

Processors 2070 and 2080 are shown including integrated memory controller (IMC) units 2072 and 2082, respectively. Processor 2070 also includes as part of its bus controller units point-to-point (P-P) interfaces 2076 and 2078; similarly, second processor 2080 includes P-P interfaces 2086 and 2088. Processors 2070, 2080 may exchange information via a point-to-point (P-P) interface 2050 using P-P interface circuits 2078, 2088. As shown in **Figure 20****,** IMCs 2072 and 2082 couple the processors to respective memories, namely a memory 2032 and a memory 2034, which may be portions of main memory locally attached to the respective processors.

Processors 2070, 2080 may each exchange information with a chipset 2090 via individual P-P interfaces 2052, 2054 using point to point interface circuits 2076, 2094, 2086, 2098. Chipset 2090 may optionally exchange information with the coprocessor 2038 via a high-performance interface 2039. In one embodiment, the coprocessor 2038 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 2090 may be coupled to a first bus 2016 via an interface 2096. In one embodiment, first bus 2016 may be a Peripheral Component Interconnect (PCI) bus, or a bus such as a PCI Express bus or another third generation I/O interconnect bus, although the scope of the present disclosure is not so limited.

As shown in **Figure 20****,** various I/O devices 2014 may be coupled to first bus 2016, along with a bus bridge 2018 which couples first bus 2016 to a second bus 2020. In one embodiment, one or more additional processor(s) 2015, such as coprocessors, high-throughput MIC processors, GPGPU's, accelerators (such as, e.g., graphics accelerators or digital signal processing (DSP) units), field programmable gate arrays, or any other processor, are coupled to first bus 2016. In one embodiment, second bus 2020 may be a low pin count (LPC) bus. Various devices may be coupled to a second bus 2020 including, for example, a keyboard and/or mouse 2022, communication devices 2027 and a storage unit 2028 such as a disk drive or other mass storage device which may include instructions/code and data 2030, in one embodiment. Further, an audio I/O 2024 may be coupled to the second bus 2020. Note that other architectures are possible. For example, instead of the point-to-point architecture of **Figure 20****,** a system may implement a multi-drop bus or other such architecture.

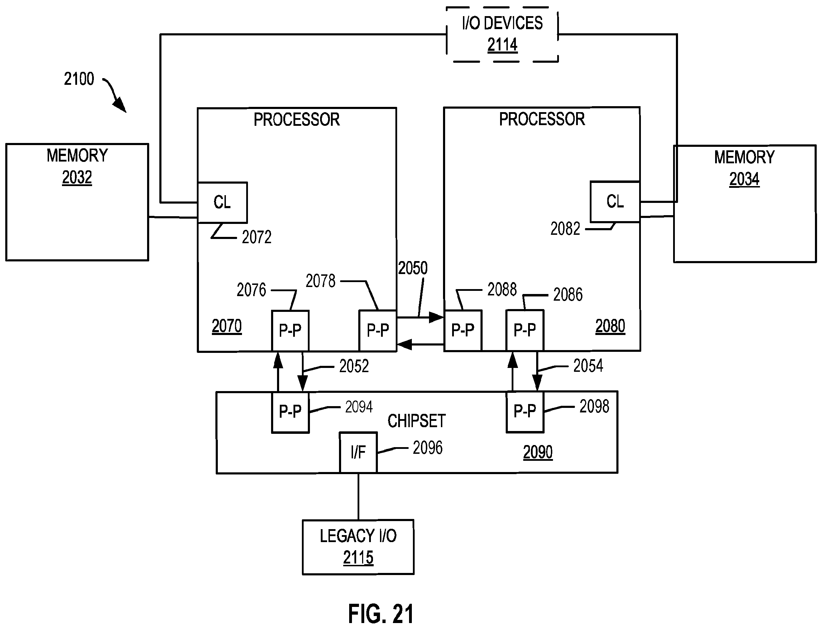

Referring now to **Figure 21****,** shown is a block diagram of a second more specific exemplary system 2100 in accordance with an embodiment of the present disclosure. Like elements in **Figures 20** **and** **21** bear like reference numerals, and certain aspects of **Figure 20** have been omitted from **Figure 21** in order to avoid obscuring other aspects of **Figure 21****.**

**Figure 21** illustrates that the processors 2070, 2080 may include integrated memory and I/O control logic ("CL") 2072 and 2082, respectively. Thus, the CL 2072, 2082 include integrated memory controller units and include I/O control logic. **Figure 21** illustrates that not only are the memories 2032, 2034 coupled to the CL 2072, 2082, but also that I/O devices 2114 are also coupled to the control logic 2072, 2082. Legacy I/O devices 2115 are coupled to the chipset 2090.

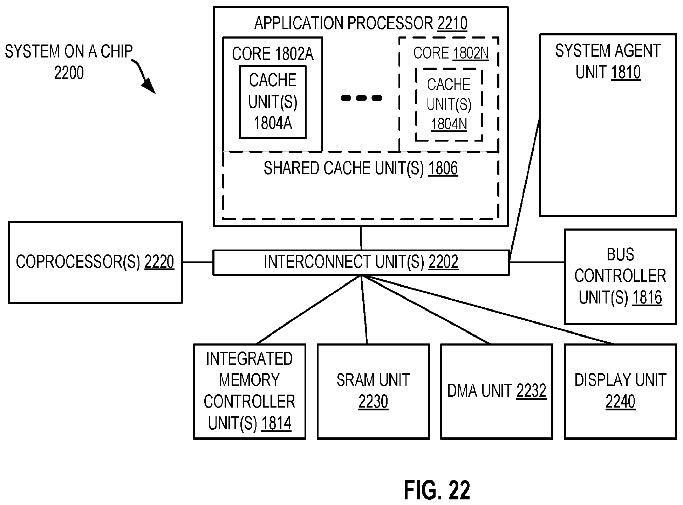

Referring now to **Figure 22****,** shown is a block diagram of a SoC 2200 in accordance with an embodiment of the present disclosure. Similar elements in **Figure 18** bear like reference numerals. Also, dashed lined boxes are optional features on more advanced SoCs. In **Figure 22****,** an interconnect unit(s) 2202 is coupled to: an application processor 2210 which includes a set of one or more cores 202A-N and shared cache unit(s) 1806; a system agent unit 1810; a bus controller unit(s) 1816; an integrated memory controller unit(s) 1814; a set or one or more coprocessors 2220 which may include integrated graphics logic, an image processor, an audio processor, and a video processor; an static random access memory (SRAM) unit 2230; a direct memory access (DMA) unit 2232; and a display unit 2240 for coupling to one or more external displays. In one embodiment, the coprocessor(s) 2220 include a special-purpose processor, such as, for example, a network or communication processor, compression engine, GPGPU, a high-throughput MIC processor, embedded processor, or the like.

Embodiments (e.g., of the mechanisms) disclosed herein may be implemented in hardware, software, firmware, or a combination of such implementation approaches. Embodiments of the disclosure may be implemented as computer programs or program code executing on programmable systems comprising at least one processor, a storage system (including volatile and non-volatile memory and/or storage elements), at least one input device, and at least one output device.

Program code, such as code 2030 illustrated in **Figure 20****,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the disclosure also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

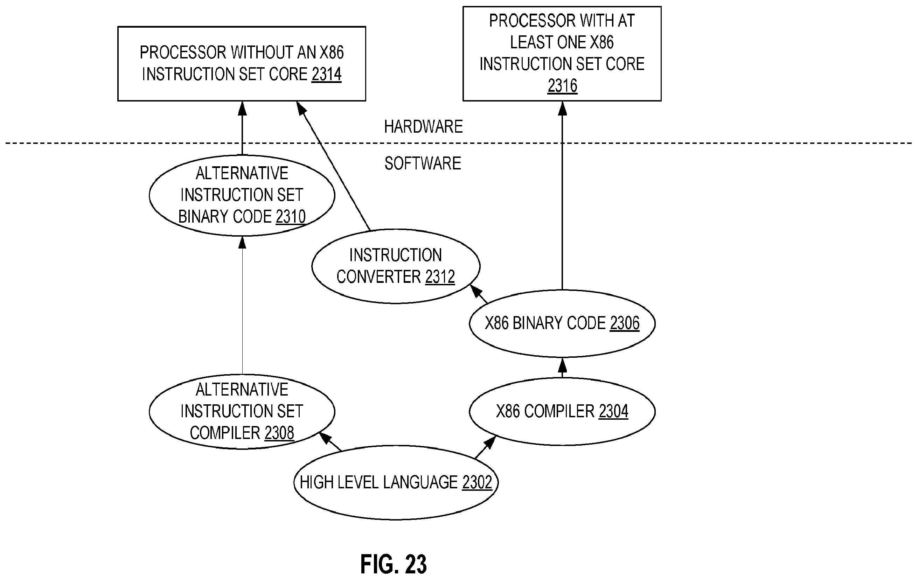

**Figure 23** is a block diagram contrasting the use of a software instruction converter to convert binary instructions in a source instruction set to binary instructions in a target instruction set according to embodiments of the disclosure. In the illustrated embodiment, the instruction converter is a software instruction converter, although alternatively the instruction converter may be implemented in software, firmware, hardware, or various combinations thereof. **Figure 23** shows a program in a high-level language 2302 may be compiled using an x86 compiler 2304 to generate x86 binary code 2306 that may be natively executed by a processor with at least one x86 instruction set core 2316. The processor with at least one x86 instruction set core 2316 represents any processor that can perform substantially the same functions as an Intel^{®} processor with at least one x86 instruction set core by compatibly executing or otherwise processing (1) a substantial portion of the instruction set of the Intel^{®} x86 instruction set core or (2) object code versions of applications or other software targeted to run on an Intel^{®} processor with at least one x86 instruction set core, in order to achieve substantially the same result as an Intel^{®} processor with at least one x86 instruction set core. The x86 compiler 2304 represents a compiler that is operable to generate x86 binary code 2306 (e.g., object code) that can, with or without additional linkage processing, be executed on the processor with at least one x86 instruction set core 2316. Similarly, **Figure 23** shows the program in the high level language 2302 may be compiled using an alternative instruction set compiler 2308 to generate alternative instruction set binary code 2310 that may be natively executed by a processor without at least one x86 instruction set core 2314 (e.g., a processor with cores that execute the MIPS instruction set of MIPS Technologies of Sunnyvale, CA and/or that execute the ARM instruction set of ARM Holdings of Sunnyvale, CA). The instruction converter 2312 is used to convert the x86 binary code 2306 into code that may be natively executed by the processor without an x86 instruction set core 2314. This converted code is not likely to be the same as the alternative instruction set binary code 2310 because an instruction converter capable of this is difficult to make; however, the converted code will accomplish the general operation and be made up of instructions from the alternative instruction set. Thus, the instruction converter 2312 represents software, firmware, hardware, or a combination thereof that, through emulation, simulation, or any other process, allows a processor or other electronic device that does not have an x86 instruction set processor or core to execute the x86 binary code 2306.

## Claims

1. An apparatus comprises:
an encryption circuit (114) in a hardware processor (102, 122) of a first computer system (100) to encrypt data;
a capability register (106, 126) of the first computer system comprising a first field to indicate the encryption circuit to support an address independent encryption mode and a second field to indicate the encryption circuit to support a software supplied offset based encryption mode
a memory controller circuit (116, 136), of the first computer system, comprising a port to couple to a network interface controller circuit (150);
a direct memory access engine circuit (116A, 136A) of the first computer system to access a memory (120-0, 120-1) in the first computer system; and
the hardware processor to, for a request to perform a live migration of a virtual machine (302, 304) from the first computer system to a second computer system via the network interface controller circuit:
encrypt code and data of the virtual machine from the memory with an encryption key by the encryption circuit of the hardware processor as indicated in the capability register,
store the encrypted code and data of the virtual machine within a migration buffer (306) of the memory of the first computer system by the direct memory access engine circuit, and
cause the network interface controller circuit to send the encrypted code and data of the virtual machine from the migration buffer to the second computer system via the network interface controller circuit;
wherein the hardware processor is to cause the network interface controller circuit to send the encrypted code and data of the virtual machine from the migration buffer to the second computer system via a remote direct memory access engine circuit (154) of the network interface controller circuit.

2. The apparatus of claim 1, wherein the hardware processor is to cause the network interface controller circuit to send the encrypted code and data of the virtual machine from the migration buffer to the second computer system without the network interface controller circuit performing an additional encryption.

3. The apparatus of any one of claims 1-2, wherein the encryption circuit is separate from any hardware processor core of the first computer system.

4. The apparatus of any one of claims 1-3, wherein the hardware processor, when in the address independent encryption mode, is to cause the encryption circuit to perform an address independent encryption of the code and data of the virtual machine from the memory.

5. The apparatus of any one of claims 1-3, wherein the hardware processor, when in an address dependent encryption mode, is to cause the encryption circuit to perform an address dependent encryption of the code and data of the virtual machine from the memory.

6. The apparatus of any one of claims 1-5, wherein the encryption circuit in the hardware processor is to encrypt the code and data of the virtual machine from the memory with an offset provided from the second computer system and the encryption key.

7. The apparatus of any one of claims 1-6, wherein the encryption circuit in the hardware processor is to encrypt the code and data of the virtual machine from the memory with the encryption key provided from the second computer system.

8. A method comprises:
executing a virtual machine (302, 304) on a first computer system (100);
sending an indication from the first computer system to a second computer system of a live migration of the virtual machine from the first computer system to the second computer system via a network interface controller circuit (150) of the first computer system;
encrypting code and data of the virtual machine from a memory (120-0, 120-1) of the first computer system with an encryption key by an encryption circuit (114) in a hardware processor (102, 122) of the first computer system as indicated in a capability register (106, 126) of the first computer system comprising a first field to indicate the encryption circuit to support an address independent encryption mode and a second field to indicate the encryption circuit to support a software supplied offset based encryption mode;
storing the encrypted code and data of the virtual machine within a migration buffer (306) of the memory of the first computer system by a direct memory access engine circuit (116A, 136A) of the first computer system; and
sending the encrypted code and data of the virtual machine from the migration buffer to the second computer system via the network interface controller circuit,
wherein the sending of the encrypted code and data of the virtual machine from the migration buffer to the second computer system is via a remote direct memory access engine circuit (154) of the network interface controller circuit.

9. The method of claim 8, wherein the sending of the encrypted code and data of the virtual machine from the migration buffer to the second computer system via the network interface controller circuit is without the network interface controller circuit performing an additional encryption.

10. The method of any one of claims 8-9, wherein the encryption circuit is separate from any hardware processor core of the first computer system.

11. The method of any one of claims 8-10, wherein the encrypting is the address independent encryption of the code and data of the virtual machine from the memory when the encryption circuit in the hardware processor is set into the address independent encryption mode.

12. The method of any one of claims 8-10, wherein the encrypting is an address dependent encryption of the code and data of the virtual machine from the memory when the encryption circuit in the hardware processor is set into an address dependent encryption mode.

13. The method of any one of claim 8-12, wherein the encrypting is with an offset provided from the second computer system.

## Patentansprüche

1. Einrichtung, die umfasst:
eine Verschlüsselungsschaltung (114) in einem Hardware-Prozessor (102, 122) eines ersten Computersystems (100) zum Verschlüsseln von Daten;
ein Fähigkeitsregister (106, 126) des ersten Computersystems, umfassend ein erstes Feld zum Anzeigen der Verschlüsselungsschaltung zur Unterstützung eines adressunabhängigen Verschlüsselungsmodus und ein zweites Feld zum Anzeigen der Verschlüsselungsschaltung zur Unterstützung eines softwaregestützten, offsetbasierten Verschlüsselungsmodus;
eine Speichersteuerungsschaltung (116, 136) des ersten Computersystems, umfassend einen Anschluss zum Koppeln mit einer Netzwerkschnittstellen-Steuerungsschaltung (150) ;
eine Direktspeicherzugriffs-Engine-Schaltung (116A, 136A) des ersten Computersystems zum Zugreifen auf einen Speicher (120-0, 120-1) im ersten Computersystem; und
den Hardware-Prozessor, um bei einer Anforderung zum Durchführen einer Live-Migration einer virtuellen Maschine (302, 304) vom ersten Computersystem auf ein zweites Computersystem über die Netzwerkschnittstellen-Steuerungsschaltung:
Code und Daten der virtuellen Maschine aus dem Speicher mit einem Verschlüsselungsschlüssel durch die Verschlüsselungsschaltung des Hardware-Prozessors, wie im Fähigkeitsregister angegeben, zu verschlüsseln,
den verschlüsselten Code und die verschlüsselten Daten der virtuellen Maschine in einem Migrationspuffer (306) des Speichers des ersten Computersystems durch die Direktspeicherzugriffs-Engine-Schaltung zu speichern und die Netzwerkschnittstellen-Steuerungsschaltung zu veranlassen, den verschlüsselten Code und die verschlüsselten Daten der virtuellen Maschine aus dem Migrationspuffer über die Netzwerkschnittstellen-Steuerungsschaltung an das zweite Computersystem zu senden;
wobei der Hardware-Prozessor dazu dient, die Netzwerkschnittstellen-Steuerungsschaltung zu veranlassen, den verschlüsselten Code und die verschlüsselten Daten der virtuellen Maschine aus dem Migrationspuffer über eine entfernte Direktspeicherzugriffs-Engine-Schaltung (154) der Netzwerkschnittstellen-Steuerungsschaltung an das zweite Computersystem zu senden.

2. Einrichtung nach Anspruch 1, wobei der Hardware-Prozessor dazu dient, die Netzwerkschnittstellen-Steuerungsschaltung zu veranlassen, den verschlüsselten Code und die verschlüsselten Daten der virtuellen Maschine aus dem Migrationspuffer an das zweite Computersystem zu senden, ohne dass die Netzwerkschnittstellen-Steuerungsschaltung eine zusätzliche Verschlüsselung durchführt.

3. Einrichtung nach einem der Ansprüche 1-2, wobei die Verschlüsselungsschaltung von jedem Hardware-Prozessorkern des ersten Computersystems getrennt ist.

4. Einrichtung nach einem der Ansprüche 1-3, wobei der Hardware-Prozessor im adressunabhängigen Verschlüsselungsmodus dazu dient, die Verschlüsselungsschaltung zu veranlassen, eine adressunabhängige Verschlüsselung des Codes und der Daten der virtuellen Maschine aus dem Speicher durchzuführen.

5. Einrichtung nach einem der Ansprüche 1-3, wobei der Hardware-Prozessor im adressabhängigen Verschlüsselungsmodus dazu dient, die Verschlüsselungsschaltung zu veranlassen, eine adressabhängige Verschlüsselung des Codes und der Daten der virtuellen Maschine aus dem Speicher durchzuführen.

6. Einrichtung nach einem der Ansprüche 1-5, wobei die Verschlüsselungsschaltung im Hardware-Prozessor dazu dient, den Code und die Daten der virtuellen Maschine aus dem Speicher mit einem vom zweiten Computersystem bereitgestellten Offset und dem Verschlüsselungsschlüssel zu verschlüsseln.

7. Einrichtung nach einem der Ansprüche 1-6, wobei die Verschlüsselungsschaltung im Hardware-Prozessor dazu dient, den Code und die Daten der virtuellen Maschine aus dem Speicher mit dem vom zweiten Computersystem bereitgestellten Verschlüsselungsschlüssel zu verschlüsseln.

8. Verfahren, das umfasst:
Ausführen einer virtuellen Maschine (302, 304) auf einem ersten Computersystem (100);
Senden einer Anzeige, vom ersten Computersystem an ein zweites Computersystem, einer Live-Migration der virtuellen Maschine vom ersten Computersystem auf das zweite Computersystem über eine Netzwerkschnittstellen-Steuerungsschaltung (150) des ersten Computersystems;
Verschlüsseln von Code und Daten der virtuellen Maschine aus einem Speicher (120-0, 120-1) des ersten Computersystems mit einem Verschlüsselungsschlüssel durch eine Verschlüsselungsschaltung (114) in einem Hardware-Prozessor (102, 122) des ersten Computersystems, wie in einem Fähigkeitsregister (106, 126) des ersten Computersystems, das ein erstes Feld zum Anzeigen der Verschlüsselungsschaltung zur Unterstützung eines adressunabhängigen Verschlüsselungsmodus und ein zweites Feld zum Anzeigen der Verschlüsselungsschaltung zur Unterstützung eines softwaregestützten, offsetbasierten Verschlüsselungsmodus umfasst, angezeigt;
Speichern des verschlüsselten Codes und der verschlüsselten Daten der virtuellen Maschine in einem Migrationspuffer (306) des Speichers des ersten Computersystems durch eine Direktspeicherzugriffs-Engine-Schaltung (116A, 136A) des ersten Computersystems; und
Senden des verschlüsselten Codes und der verschlüsselten Daten der virtuellen Maschine aus dem Migrationspuffer über die Netzwerkschnittstellen-Steuerungsschaltung an das zweite Computersystem,
wobei das Senden des verschlüsselten Codes und der verschlüsselten Daten der virtuellen Maschine aus dem Migrationspuffer an das zweite Computersystem über eine entfernte Direktspeicherzugriffs-Engine-Schaltung (154) der Netzwerkschnittstellen-Steuerungsschaltung erfolgt.

9. Verfahren nach Anspruch 8, wobei das Senden des verschlüsselten Codes und der verschlüsselten Daten der virtuellen Maschine vom Migrationspuffer an das zweite Computersystem über die Netzwerkschnittstellen-Steuerungsschaltung erfolgt, ohne dass die Netzwerkschnittstellen-Steuerungsschaltung eine zusätzliche Verschlüsselung durchführt.

10. Verfahren nach einem der Ansprüche 8-9, wobei die Verschlüsselungsschaltung von jedem Hardware-Prozessorkern des ersten Computersystems getrennt ist.

11. Verfahren nach einem der Ansprüche 8-10, wobei das Verschlüsseln die adressunabhängige Verschlüsselung des Codes und der Daten der virtuellen Maschine aus dem Speicher ist, wenn die Verschlüsselungsschaltung im Hardware-Prozessor in den adressunabhängigen Verschlüsselungsmodus gesetzt ist.

12. Verfahren nach einem der Ansprüche 8-10, wobei das Verschlüsseln eine adressabhängige Verschlüsselung des Codes und der Daten der virtuellen Maschine aus dem Speicher ist, wenn die Verschlüsselungsschaltung im Hardware-Prozessor in einen adressabhängigen Verschlüsselungsmodus gesetzt ist.

13. Verfahren nach einem der Ansprüche 8-12, wobei das Verschlüsseln mit einem Offset erfolgt, das vom zweiten Computersystem bereitgestellt wird.

## Revendications

1. Appareil comprenant :
un circuit de chiffrement (114) dans un processeur matériel (102, 122) d'un premier système informatique (100) pour chiffrer des données ;
un registre de capacité (106, 126) du premier système informatique comprenant un premier champ pour indiquer au circuit de chiffrement de prendre en charge un mode de chiffrement indépendant de l'adresse et un second champ pour indiquer au circuit de chiffrement de prendre en charge un mode de chiffrement à décalage logiciel un circuit de commande de mémoire (116, 136) du premier système informatique, comprenant un port pour se coupler à un circuit de commande d'interface réseau (150) ;
un circuit de moteur d'accès direct à la mémoire (116A, 136A) du premier système informatique pour accéder à une mémoire (120-0, 120-1) du premier système informatique ; et
le processeur matériel pour, pour une demande d'exécution d'une migration en direct d'une machine virtuelle (302, 304) du premier système informatique à un second système informatique par le biais du circuit de commande d'interface réseau :
chiffrer un code et des données de la machine virtuelle depuis la mémoire au moyen d'une clé de chiffrement par le circuit de chiffrement du processeur matériel comme indiqué dans le registre de capacité,
stocker le code et les données chiffrés de la machine virtuelle dans un tampon de migration (306) de la mémoire du premier système informatique par le circuit de moteur d'accès direct à la mémoire, et
amener le circuit de commande d'interface réseau à envoyer le code et les données chiffrés de la machine virtuelle du tampon de migration au second système informatique par le biais du circuit de commande d'interface réseau ;
dans lequel le processeur matériel est destiné à amener le circuit de commande d'interface réseau à envoyer le code et les données chiffrés de la machine virtuelle du tampon de migration au second système informatique par le biais d'un circuit de moteur d'accès direct à distance à la mémoire (154) du circuit de commande d'interface réseau.

2. Appareil selon la revendication 1, dans lequel le processeur matériel est destiné à amener le circuit de commande d'interface réseau à envoyer le code et les données chiffrés de la machine virtuelle du tampon de migration au second système informatique sans que le circuit de commande d'interface réseau n'exécute un chiffrement supplémentaire.

3. Appareil selon l'une quelconque des revendications 1 à 2, dans lequel le circuit de chiffrement est séparé de tout noyau de processeur matériel du premier système informatique.

4. Appareil selon l'une quelconque des revendications 1 à 3, dans lequel le processeur matériel, dans le mode de chiffrement indépendant de l'adresse, est destiné à amener le circuit de chiffrement à exécuter un chiffrement indépendant de l'adresse du code et des données de la machine virtuelle depuis la mémoire.

5. Appareil selon l'une quelconque des revendications 1 à 3, dans lequel le processeur matériel, dans le mode de chiffrement dépendant de l'adresse, est destiné à amener le circuit de chiffrement à exécuter un chiffrement dépendant de l'adresse du code et des données de la machine virtuelle depuis la mémoire.

6. Appareil selon l'une quelconque des revendications 1 à 5, dans lequel le circuit de chiffrement dans le processeur matériel est destiné à chiffrer le code et les données de la machine virtuelle depuis la mémoire avec un décalage provenant du second système informatique et la clé de chiffrement.

7. Appareil selon l'une quelconque des revendications 1 à 6, dans lequel le circuit de chiffrement dans le processeur matériel est destiné à chiffrer le code et les données de la machine virtuelle depuis la mémoire avec la clé de chiffrement provenant du second système informatique.

8. Procédé comprenant :
l'exécution d'une machine virtuelle (302, 304) sur un premier système informatique (100) ;
l'envoi d'une indication du premier système informatique à un second système informatique d'une migration en direct de la machine virtuelle du premier système informatique au second système informatique par le biais d'un circuit de commande d'interface réseau (150) du premier système informatique ;
le chiffrement d'un code et de données de la machine virtuelle depuis une mémoire (120-0, 120-1) du premier système informatique au moyen d'une clé de chiffrement par un circuit de chiffrement (114) dans un processeur matériel (102, 122) du premier système informatique comme indiqué dans un registre de capacité (106, 126) du premier système informatique comprenant un premier champ pour indiquer au circuit de chiffrement de prendre en charge un mode de chiffrement indépendant de l'adresse et un second champ pour indiquer au circuit de chiffrement de prendre en charge un mode de chiffrement à décalage logiciel ;
le stockage du code et des données chiffrés de la machine virtuelle dans un tampon de migration (306) de la mémoire du premier système informatique par un circuit de moteur d'accès direct à la mémoire (116A, 136A) du premier système informatique ; et
l'envoi du code et des données chiffrés de la machine virtuelle du tampon de migration au second système informatique par le biais du circuit de commande d'interface réseau,
dans lequel l'envoi du code et des données chiffrés de la machine virtuelle du tampon de migration au second système informatique est exécuté par le biais d'un circuit de moteur d'accès direct à distance à la mémoire (154) du circuit de commande d'interface réseau.

9. Procédé selon la revendication 8, dans lequel l'envoi du code et des données chiffrés de la machine virtuelle du tampon de migration au second système informatique par le biais du circuit de commande d'interface réseau est exécuté sans que le circuit de commande d'interface réseau n'exécute un chiffrement supplémentaire.

10. Procédé selon l'une quelconque des revendications 8 à 9, dans lequel le circuit de chiffrement est séparé de tout noyau de processeur matériel du premier système informatique.

11. Procédé selon l'une quelconque des revendications 8 à 10, dans lequel le chiffrement est le chiffrement indépendant de l'adresse du code et des données de la machine virtuelle depuis la mémoire lorsque le circuit de chiffrement dans le processeur matériel est défini dans le mode de chiffrement indépendant de l'adresse.

12. Procédé selon l'une quelconque des revendications 8 à 10, dans lequel le chiffrement est un chiffrement dépendant de l'adresse du code et des données de la machine virtuelle depuis la mémoire lorsque le circuit de chiffrement dans le processeur matériel est défini dans un mode de chiffrement dépendant de l'adresse.

13. Procédé selon l'une quelconque des revendications 8 à 12, dans lequel le chiffrement est fourni avec un décalage depuis le second système informatique.
